(19) Europäisches Patentamt European Patent Office Office européen des brevets

(11) **EP 4 712 625 A1**

(12) **EUROPEAN PATENT APPLICATION**
published in accordance with Art. 153(4) EPC

(43) Date of publication:
**18.03.2026 Bulletin 2026/12**

(21) Application number: 23936883.0

(22) Date of filing: **12.05.2023**

(51) International Patent Classification (IPC):
*H04W 72/0446* *(2023.01)*

(52) Cooperative Patent Classification (CPC):
**H04W 72/0446**

(86) International application number:
**PCT/CN2023/094070**

(87) International publication number:
**WO 2024/234193 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **GUO, Shengxiang
Beijing 100085 (CN)**

(74) Representative: **Hersina, Günter et al
Schoppe, Zimmermann, Stöckeler
Zinkler, Schenk & Partner mbB
Patentanwälte
Radlkoferstrasse 2
81373 München (DE)**

(54) **METHOD FOR DETERMINING UPLINK GRANT-FREE RESOURCE, METHOD FOR
CONFIGURING UPLINK GRANT-FREE RESOURCE, AND APPARATUS**

(57) Disclosed in the embodiments of the present disclosure are a method for determining an uplink grant-free resource, a method for configuring an uplink grant-free resource, and an apparatus, which may be applied to a time-division duplexing (TDD) system. The method for determining an uplink grant-free resource comprises: a terminal device acquiring at least one configured grant (CG) configuration; the terminal device determining uplink and downlink transmission configuration parameters, which are configured by a network device; and according to the uplink and downlink trans- mission configuration parameters, the terminal device determining at least one valid transmission slot of a CG resource corresponding to the at least one CG con- figuration, wherein one CG resource corresponds to one CG configuration. By means of implementing the embo- diments of the present disclosure, at least one CG con- figuration may be supported in a TDD frame structure, and the problem of a conflict between the configuration of a plurality of transmission occasions in at least one resource and a downlink process may be solved.

Fig.2

## Description

### FIELD

The present disclosure relates to the field of communication technologies, and in particular, to a method and apparatus for determining and configuring an uplink grant-free resource.

### BACKGROUND

In wireless communication networks, extended reality (XR) technology has advantages such as multiple perspectives and strong interactivity, and can provide users with a brand-new visual experience, having great application value and commercial potential. XR includes technologies such as virtual reality (VR), augmented reality (AR), and mixed reality (MR), and may be widely applied in numerous fields such as entertainment, gaming, healthcare, advertising, industry, online education, and engineering.

XR data volume is generally large and has characteristics of dynamic variation. In related art, typically a network device configures configured grant (CG) resources for a terminal device, enabling the terminal device to complete the full transmission of an XR video frame on the CG resources.

However, there is currently a lack of effective means for configuring uplink grant-free resources suitable for Time Division Duplexing (TDD) systems.

### SUMMARY

Embodiments of the present disclosure provide a method and apparatus for determining and configuring an uplink grant-free resource, which may be applied to a Time Division Duplexing (TDD) system. By determining at least one valid transmission slot for at least one CG resource corresponding to at least one configured grant (CG) configuration based on an uplink-downlink transmission configuration parameter, it can support configuring at least one CG configuration in a TDD frame structure and solve the problem of conflict between multiple transmission occasions configured within at least one resource and downlink transmissions.

In a first aspect, an embodiment of the present disclosure provides a method for determining an uplink grant-free resource, where the method is performed by a terminal device. The method includes:

obtaining at least one configured grant (CG) configuration;
determining an uplink-downlink transmission configuration parameter configured by a network device; and
according to the uplink-downlink transmission configuration parameter, determining at least one valid transmission slot for at least one CG resource corresponding to the at least one CG configuration; where one CG resource corresponds to one CG configuration.

In this technical solution, by determining at least one valid transmission slot for at least one CG resource corresponding to the at least one CG configuration based on the uplink-downlink transmission configuration parameter, it can support configuring at least one CG configuration in a TDD frame structure and solve the problem of conflict between multiple transmission occasions configured within at least one resource and downlink transmissions.

In a second aspect, an embodiment of the present disclosure provides a method for configuring an uplink grant-free resource, where the method is performed by a network device. The method includes:

configuring at least one configured grant (CG) configuration for a terminal device; and
sending an uplink-downlink transmission configuration parameter to the terminal device; where the CG configuration and the uplink-downlink transmission configuration parameter are used for the terminal device to determine at least one valid transmission slot for at least one CG resource corresponding to the at least one CG configuration, and one CG resource corresponds to one CG configuration.

In a third aspect, an embodiment of the present disclosure provides a communication system, including: a terminal device and a network device, where the terminal device is configured to implement the method according to the first aspect; and the network device is configured to implement the method according to the second aspect.

In a fourth aspect, an embodiment of the present disclosure provides a communication apparatus. The communication apparatus has the functionality to implement part or all of the method of the terminal device described in the first aspect. For example, the functionality of the communication apparatus may include part or all of the functionalities in the embodiments of the present disclosure, or may include the functionality of implementing any single embodiment of the present disclosure alone. The functionality may be implemented by hardware, or by hardware executing corresponding software. The hardware or software includes one or more units or modules corresponding to the aforementioned functionalities.

In an embodiment, the structure of the communication apparatus may include a transceiver module and a processing module, where the processing module is configured to support the communication apparatus in performing the corresponding functionalities in the aforementioned method. The transceiver module is configured to support communication between the communication apparatus and other devices. The communication apparatus may further include a storage module, where the storage module is coupled to the transceiver module and the processing module, and stores necessary computer programs and data for the communication apparatus.

In an embodiment, the processing module is configured to obtain at least one configured grant (CG) configuration; the processing module is further configured to determine an uplink-downlink transmission configuration parameter configured by a network device; the processing module is further configured to, according to the uplink-downlink transmission configuration parameter, determine at least one valid transmission slot for at least one CG resource corresponding to the at least one CG configuration; where one CG resource corresponds to one CG configuration.

As an example, the processing module may be a processor, the transceiver module may be a transceiver or a communication interface, and the storage module may be a memory.

In a fifth aspect, an embodiment of the present disclosure provides another communication apparatus. The communication apparatus has the functionality to implement part or all of the method of the network device described in the second aspect. For example, the functionality of the communication apparatus may include part or all of the functionalities in the embodiments of the present disclosure, or may include the functionality of implementing any single embodiment of the present disclosure alone. The functionality may be implemented by hardware, or by hardware executing corresponding software. The hardware or software includes one or more units or modules corresponding to the aforementioned functionalities.

In an embodiment, the structure of the communication apparatus may include a transceiver module and a processing module, where the processing module is configured to support the communication apparatus in performing the corresponding functionalities in the aforementioned method. The transceiver module is configured to support communication between the communication apparatus and other devices. The communication apparatus may further include a storage module, where the storage module is coupled to the transceiver module and the processing module, and stores necessary computer programs and data for the communication apparatus.

In an embodiment, the communication apparatus includes: a processing module, configured to configure at least one configured grant (CG) configuration for a terminal device; a transceiver module, configured to send an uplink-downlink transmission configuration parameter to the terminal device; where the CG configuration and the uplink-downlink transmission configuration parameter are used for the terminal device to determine at least one valid transmission slot for at least one CG resource corresponding to the at least one CG configuration, and one CG resource corresponds to one CG configuration.

In a sixth aspect, an embodiment of the present disclosure provides a communication apparatus. The communication apparatus includes a processor, where when the processor invokes a computer program in a memory, the method according to the first aspect is executed.

In a seventh aspect, an embodiment of the present disclosure provides a communication apparatus. The communication apparatus includes a processor, where when the processor invokes a computer program in a memory, the method according to the second aspect is executed.

In an eighth aspect, an embodiment of the present disclosure provides a communication apparatus. The communication apparatus includes a processor and a memory, where the memory stores a computer program; the processor executes the computer program stored in the memory to cause the communication apparatus to perform the method according to the first aspect.

In a ninth aspect, an embodiment of the present disclosure provides a communication apparatus. The communication apparatus includes a processor and a memory, where the memory stores a computer program; the processor executes the computer program stored in the memory to cause the communication apparatus to perform the method according to the second aspect.

In a tenth aspect, an embodiment of the present disclosure provides a communication apparatus. The apparatus includes a processor and an interface circuit, where the interface circuit is configured to receive code instructions and transmit them to the processor, and the processor is configured to run the code instructions to cause the apparatus to perform the method according to the first aspect.

In an eleventh aspect, an embodiment of the present disclosure provides a communication apparatus. The apparatus includes a processor and an interface circuit, where the interface circuit is configured to receive code instructions and transmit them to the processor, and the processor is configured to run the code instructions to cause the apparatus to perform the method according to the second aspect.

In a twelfth aspect, an embodiment of the present disclosure provides a communication system. The system includes the communication apparatus according to the fourth aspect and the communication apparatus according to the fifth aspect, or the system includes the communication apparatus according to the sixth aspect and the communication apparatus according to the seventh aspect, or the system includes the communication apparatus according to the eighth aspect and the communication apparatus according to the ninth aspect, or the system includes the communication apparatus according to the tenth aspect and the communication apparatus according to the eleventh aspect.

In a thirteenth aspect, an embodiment of the present disclosure provides a computer-readable storage medium, configured to store instructions for use by the terminal device described above, where when the instructions are executed, the terminal device is caused to perform the method according to the first aspect.

In a fourteenth aspect, an embodiment of the present disclosure provides a computer-readable storage medium, configured to store instructions for use by the network device described above, where when the instructions are executed, the network device is caused to perform the method according to the second aspect.

In a fifteenth aspect, the present disclosure further provides a computer program product including a computer program, where when the computer program runs on a computer, the computer is caused to execute the method according to the first aspect.

In a sixteenth aspect, the present disclosure further provides a computer program product including a computer program, where when the computer program runs on a computer, the computer is caused to execute the method according to the second aspect.

In a seventeenth aspect, the present disclosure provides a computer program, where when the computer program runs on a computer, the computer is caused to execute the method according to the first aspect.

In an eighteenth aspect, the present disclosure provides a computer program, where when the computer program runs on a computer, the computer is caused to execute the method according to the second aspect.

## BRIEF DESCRIPTION OF THE DRAWINGS

In order to more clearly illustrate the technical solutions in the embodiments of the present disclosure or the background art, the following will briefly describe the drawings required for use in the embodiments of the present disclosure or the background art.

FIG. 1 is a schematic architectural diagram of a communication system provided by an embodiment of the present disclosure;

FIG. 2 is a schematic flowchart of a method for determining an uplink grant-free resource provided by an embodiment of the present disclosure;

FIG. 3a is a schematic flowchart of another method for determining an uplink grant-free resource provided by an embodiment of the present disclosure;

FIG. 3b is an example diagram 1 of valid transmission slots distributed on a TDD frame structure provided by an embodiment of the present disclosure;

FIG. 3c is an example diagram 2 of valid transmission slots distributed on a TDD frame structure provided by an embodiment of the present disclosure;

FIG. 4 is a flowchart of a method for configuring an uplink grant-free resource provided by an embodiment of the present disclosure;

FIG. 5 is a schematic structural diagram of a communication apparatus provided by an embodiment of the present disclosure;

FIG. 6 is a schematic structural diagram of another communication apparatus provided by an embodiment of the present disclosure;

FIG. 7 is an interaction flowchart of a communication system provided by an embodiment of the present disclosure; and

FIG. 8 is an interaction flowchart of another communication system provided by an embodiment of the present disclosure.

## DETAILED DESCRIPTION

The following describes the embodiments of the present disclosure in detail. Examples of the embodiments are shown in the accompanying drawings, where the same or similar reference numerals throughout denote the same or similar elements or elements having the same or similar functions. The embodiments described below with reference to the drawings are exemplary and are intended to explain the present disclosure, but should not be construed as limiting the present disclosure. In the description of the present disclosure, unless otherwise specified, "/" means or, for example, A/B can mean A or B; the term "and/or" herein is merely an association relationship describing associated objects, indicating that three relationships may exist, for example, A and/or B may indicate: A exists alone, both A and B exist, and B exists alone.

The terms used in the embodiments of the present disclosure are for the purpose of describing specific embodiments only and are not intended to limit the embodiments of the present disclosure. The singular forms "a", "an" and "the" used in the embodiments of the present disclosure and the appended claims are also intended to include the plural forms, unless the context clearly indicates otherwise.

It should be understood that, although the terms first, second, third, etc. may be used in the embodiments of the present disclosure to describe various information, such information should not be limited to these terms. These terms are only used to distinguish information of the same type from one another. For example, without departing from the scope of the embodiments of the present disclosure, first information may also be referred to as second information, and similarly, second information may also be referred to as first information. Depending on the context, the word "if" as used herein may be interpreted as "when" or "upon" or "in response to determining".

It should be noted that the method provided by any embodiment of the present disclosure may be performed alone, or in combination with possible implementation methods in other embodiments, or in combination with any technical solution in the related art.

The following describes the embodiments of the present disclosure in detail. Examples of the embodiments are shown in the accompanying drawings, where the same or similar reference numerals throughout denote the same or similar elements. The embodiments described below with reference to the drawings are exemplary and are intended to explain the present disclosure, but should not be construed as limiting the present disclosure.

In wireless communication networks, extended reality (XR) technology has advantages such as multiple perspectives and strong interactivity, and can provide users with a brand-new visual experience, having great application value and commercial potential. XR includes technologies such as virtual reality (VR), augmented reality (AR), and mixed reality (MR), and may be widely applied in numerous fields such as entertainment, gaming, healthcare, advertising, industry, online education, and engineering.

XR data volume is generally large and has characteristics of dynamic variation. In related art, typically a network device configures configured grant (CG) resources for a terminal device, enabling the terminal device to complete the full transmission of an XR video frame on the CG resources. However, there is currently a lack of effective means for configuring uplink grant-free resources suitable for Time Division Duplexing (TDD) systems.

To this end, embodiments of the present disclosure provide a method and apparatus for determining and configuring an uplink grant-free resource, which may be applied to a TDD system, can support configuring at least one CG configuration in a TDD frame structure, and can solve the problem of conflict between multiple transmission occasions configured within at least one resource and downlink transmissions.

To better understand the method for determining an uplink grant-free resource provided by the embodiments of the present disclosure, the communication system to which the embodiments of the present disclosure are applicable is first described.

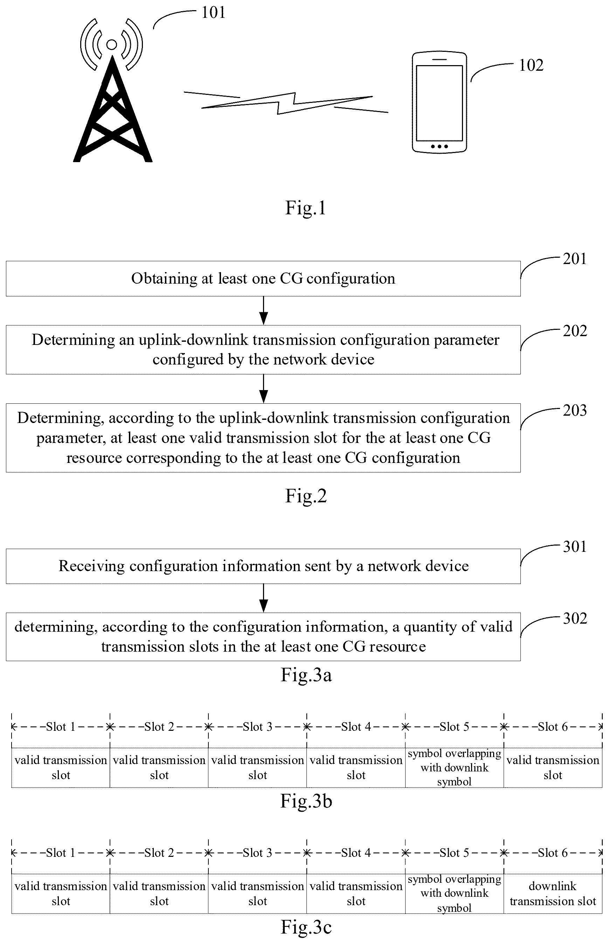

Please refer to FIG. 1, which is a schematic architectural diagram of a communication system provided by an embodiment of the present disclosure. The communication system may include, but is not limited to, one network device and one terminal device. The number and form of devices shown in FIG. 1 are for illustration only and do not constitute a limitation on the embodiments of the present disclosure. In practical applications, two or more network devices and two or more terminal devices may be included. The communication system shown in FIG. 1 includes one network device 101 and one terminal device 102 as an example.

It should be noted that the technical solutions of the embodiments of the present disclosure may be applied to various communication systems. For example: Long Term Evolution (LTE) systems, fifth generation (5G) mobile communication systems, 5G new radio (NR) systems, or other future new mobile communication systems, etc.

The network device 101 in the embodiments of the present disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. The embodiments of the present disclosure do not limit the specific technology and specific device form adopted by the network device. The network device provided by the embodiments of the present disclosure may be composed of a centralized unit (CU) and a distributed unit (DU), where the CU may also be called a control unit (control unit). The CU-DU structure can split the protocol layers of a network device, such as a base station, with the functions of some protocol layers placed under centralized control by the CU, and the functions of the remaining part or all protocol layers distributed in the DU, which is centrally controlled by the CU.

The terminal device 102 in the embodiments of the present disclosure is an entity on the user side for receiving or transmitting signals, such as a mobile phone. The terminal device may also be called a terminal, user equipment (UE), mobile station (MS), mobile terminal (MT), etc. The terminal device may be a car with communication capabilities, a smart car, a mobile phone, a wearable device, a tablet computer (Pad), a computer with wireless transceiver capabilities, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, etc. The embodiments of the present disclosure do not limit the specific technology and specific device form adopted by the terminal device.

It is understandable that the communication system described in the embodiments of the present disclosure is to more clearly illustrate the technical solutions of the embodiments of the present disclosure and does not constitute a limitation on the technical solutions provided by the embodiments of the present disclosure. Those of ordinary skill in the art will understand that as the system architecture evolves and new business scenarios emerge, the technical solutions provided by the embodiments of the present disclosure are equally applicable to similar technical problems.

The following describes in detail the method and apparatus for determining and configuring an uplink grant-free resource provided by the present disclosure with reference to the accompanying drawings.

Please refer to FIG. 2, which is a schematic flowchart of a method for determining an uplink grant-free resource provided by an embodiment of the present disclosure. It should be noted that the method may be performed by a terminal device. As shown in FIG. 2, the method may include, but is not limited to, the following steps.

In step 201, at least one CG configuration is obtained.

In the embodiments of the present disclosure, the terminal device may obtain the at least one CG configuration from the network device. The at least one CG configuration may be understood as one or more CG configurations, where the at least one CG configuration includes at least one CG resource, one CG resource corresponds to one CG configuration, and a CG resource may also be called a CG period. As an example, the network device may configure at least one CG configuration for the terminal device and send the at least one CG configuration to the terminal device. The terminal device may receive the at least one CG configuration sent by the network device. The at least one CG configuration may include multiple transmission occasions.

In an embodiment, the network device configures at least one CG resource for the terminal on one Bandwidth Part (BWP) through higher layer signaling, where one CG resource may also be called one CG period. Within the CG period configured by the network device, the terminal device may independently perform an uplink transmission on all transmission occasions (TOs) in all CG configurations. Here, the higher layer signaling may be Radio Resource Control (RRC) signaling. "May independently perform an uplink transmission" means that it may choose to perform an uplink transmission, or may choose not to perform an uplink transmission. As an example, the network device configures at least one CG resource for the terminal on one BWP through RRC signaling. Within the CG period configured by the network device, the terminal device may choose to perform an uplink transmission on all TOs in all CG configurations, or may choose not to perform an uplink transmission on all TOs in all CG configurations.

In another implementation, the network device configures partial information of at least one CG configuration for the terminal device on one BWP through higher layer signaling (such as RRC signaling), and the network device notifies the terminal device of the remaining information of the CG configuration through dynamic signaling Downlink Control Information (DCI). After the network device activates the CG configuration through dynamic signaling DCI, the terminal device may independently perform an uplink transmission on the TOs in the CG configuration within the CG period configured by the network device.

In step 202, an uplink-downlink transmission configuration parameter configured by the network device is determined.

It is worth noting that in a TDD system, the TDD frame structure includes downlink slots, flexible slots, and uplink slots. That is, TDD itself has configurations for downlink signals/downlink slots. The at least one CG configuration involved in the embodiments of the present disclosure considers the problem of overlap with the downlink (Downlink) configured by TDD during configuration. The network device performs TDD configuration through the uplink-downlink transmission configuration parameter. The terminal device may determine the uplink-downlink transmission configuration parameter configured by the network device, so as to determine, based on this uplink-downlink transmission configuration parameter, whether the transmission occasions in the at least one CG configuration overlap with the downlink symbols configured by TDD, thereby facilitating the determination of at least one valid transmission slot for the at least one CG resource corresponding to the at least one CG configuration.

In the embodiments of the present disclosure, the uplink-downlink transmission configuration parameter may include at least one of the following: parameter tdd-UL-DL-ConfigurationCommon, parameter tdd-UL-DL-Configuration-Dedicated, parameter ssb-PositionsInBurst. Here, the tdd-UL-DL-ConfigurationCommon is a cell-level configuration, the tdd-UL-DL-ConfigurationDedicated is a UE-specific configuration, and the ssb-PositionsInBurst is an initial access configuration.

In this embodiment, the terminal device may determine the parameter tdd-UL-DL-ConfigurationCommon configured by the network device.

In this embodiment, the terminal device may determine the parameter tdd-UL-DL-ConfigurationDedicated configured by the network device.

In this embodiment, the terminal device may determine the parameter ssb-PositionsInBurst configured by the network device.

In this embodiment, the terminal device may determine the parameter tdd-UL-DL-ConfigurationCommon and the parameter tdd-UL-DL-ConfigurationDedicated configured by the network device.

It should be noted that the above embodiments are not exhaustive, but are only illustrative of some embodiments, and the above embodiments may be implemented alone or in combination with multiple embodiments. The above embodiments are only illustrative and do not specifically limit the protection scope of the embodiments of the present disclosure.

In step 203, according to the uplink-downlink transmission configuration parameter, at least one valid transmission slot for the at least one CG resource corresponding to the at least one CG configuration is determined.

In the embodiments of the present disclosure, a valid transmission slot refers to a slot where uplink transmission may be performed, that is, uplink data may be sent in that transmission slot.

Optionally, in the embodiments of the present disclosure, the terminal device may determine whether the transmission occasions in the at least one CG configuration overlap with the downlink symbols indicated by the uplink-downlink transmission configuration parameter, thereby facilitating the determination of at least one valid transmission slot for the at least one CG resource corresponding to the at least one CG configuration. In an embodiment, if resources are confirmed according to the resource allocation method of multiple CG PUSCH transmission occasions within a CG period (multi-PUSCHs CG), and the terminal device determines that a transmission occasion in the at least one CG configuration overlaps with a downlink symbol in a slot indicated by the uplink-downlink transmission configuration parameter, then it is determined that this slot does not belong to a valid transmission slot. In another implementation, if resources are confirmed according to the resource allocation method of multi-PUSCHs CG, and the terminal device determines that a transmission occasion in the at least one CG configuration overlaps with a downlink symbol in a slot indicated by the uplink-downlink transmission configuration parameter, then the transmission occasion (TO) corresponding to that slot is invalidated, for example, the TO that overlaps with the symbols of that slot is discarded. Thus, through the rules of the above two implementations, the terminal device can determine at least one valid transmission slot for the at least one CG resource corresponding to the at least one CG configuration according to the uplink-downlink transmission configuration parameter.

In the embodiments of the present disclosure, the terminal device may determine valid transmission occasions for the at least one CG resource corresponding to the at least one CG configuration according to the uplink-downlink transmission configuration parameter. Here, a valid transmission occasion refers to a transmission occasion where uplink transmission may be performed, that is, uplink data may be sent in that transmission occasion. In an embodiment, if resources are confirmed according to the resource allocation method of multi-PUSCHs CG, and the terminal device determines that a transmission occasion in the at least one CG configuration overlaps with a downlink symbol in a slot indicated by the uplink-downlink transmission configuration parameter, then it is determined that no transmission occasion (TO) is configured for that slot. In another implementation, if resources are confirmed according to the resource allocation method of multi-PUSCHs CG, and the terminal device determines that a transmission occasion in the at least one CG configuration overlaps with a downlink symbol in a slot indicated by the uplink-downlink transmission configuration parameter, then the transmission occasion (TO) corresponding to that slot is invalidated, for example, the TO that overlaps with the symbols of that slot is discarded.

In the embodiments of the present disclosure, by determining at least one valid transmission slot for the at least one CG resource corresponding to the at least one CG configuration based on the uplink-downlink transmission configuration parameter, it can support configuring at least one CG configuration in a TDD frame structure and solve the problem of conflict between multiple transmission occasions configured within at least one resource and downlink transmissions.

Please refer to FIG. 3a, which is a schematic flowchart of another method for determining an uplink grant-free resource provided by an embodiment of the present disclosure. It should be noted that the method may be performed by a terminal device. As shown in FIG. 3, the method may include, but is not limited to, the following steps.

In step 301, configuration information sent by a network device is received.

In the embodiments of the present disclosure, the configuration information may include at least one of the following: a quantity of slots occupied by a transport block size (TBS), a quantity of repetitions of transmission occasions in the at least one CG resource, a quantity of transmission occasions configured in the at least one CG resource, a quantity of valid transmission occasions in the at least one CG resource.

In this embodiment, the configuration information may include the quantity of slots occupied by the TBS, where the quantity of slots occupied by the TBS refers to the quantity of slots occupied by at least one transport block.

In this embodiment, the configuration information may include the quantity of repetitions of transmission occasions in the at least one CG resource, where the quantity of repetitions of transmission occasions in the CG resource refers to the quantity of repetitions of transmission occasions configured in the CG configuration.

In this embodiment, the configuration information may include the quantity of transmission occasions configured in the at least one CG resource, where the quantity of transmission occasions configured in the CG resource refers to the quantity of transmission occasions configured in the CG configuration. Further, the configuration information may be obtained by the terminal device through implicit information. For example, if the CG configuration information includes three independent Time Domain Resource Assignment (TDRA), it indicates that the quantity of transmission occasions configured in the CG resource is 3. For another example, if the CG configuration information includes three repeated TDRAs, it indicates that the quantity of transmission occasions configured in the CG resource is 3.

In this embodiment, the configuration information may include the quantity of valid transmission occasions in the at least one CG resource, where the quantity of valid transmission occasions in the CG resource refers to one of the following: the quantity of transmission occasions configured in the CG configuration that can send uplink transmission, the quantity of transmission occasions configured in the CG configuration that have been determined to need to send uplink transmission. Further, the configuration information may be obtained by the terminal device through implicit information, or determined by the terminal.

In this embodiment, the configuration information may include the quantity of slots occupied by the TBS, the quantity of repetitions of transmission occasions in the at least one CG resource, and the quantity of transmission occasions configured in the at least one CG resource.

In this embodiment, the configuration information may include the quantity of slots occupied by the TBS, the quantity of repetitions of transmission occasions in the at least one CG resource, the quantity of transmission occasions configured in the at least one CG resource, and the quantity of valid transmission occasions in the at least one CG resource.

In this embodiment, the configuration information may include the quantity of repetitions of transmission occasions in the at least one CG resource and the quantity of transmission occasions configured in the at least one CG resource.

In this embodiment, the configuration information may include the quantity of repetitions of transmission occasions in the at least one CG resource, the quantity of transmission occasions configured in the at least one CG resource, and the quantity of valid transmission occasions in the at least one CG resource.

It should be noted that the above embodiments are not exhaustive, but are only illustrative of some embodiments, and the above embodiments may be implemented alone or in combination with multiple embodiments. The above embodiments are only illustrative and do not specifically limit the protection scope of the embodiments of the present disclosure.

In step 302, according to the configuration information, a quantity of valid transmission slots in the at least one CG resource is determined.

In the embodiments of the present disclosure, the quantity of valid transmission slots in the at least one CG resource may be determined by at least one of the following: the quantity of slots occupied by the TBS, the quantity of repetitions of transmission occasions in the at least one CG resource, the quantity of transmission occasions configured within the at least one CG resource, and the quantity of valid transmission occasions in the at least one CG resource.

In an embodiment, a first calculation formula may be used to calculate the quantity of valid transmission slots in the at least one CG resource. Here, the first calculation formula is expressed as follows: O=N*K*L, where O represents the quantity of valid transmission slots in the at least one CG resource, N represents the quantity of slots occupied by the TBS, K represents the quantity of repetitions of transmission occasions in the at least one CG resource, and L represents the quantity of transmission occasions configured within the at least one CG resource.

In another implementation, a second calculation formula may be used to calculate the quantity of valid transmission slots in the at least one CG resource. Here, the second calculation formula is expressed as follows: O=K*L.

In yet another implementation, a third calculation formula may be used to calculate the quantity of valid transmission slots in the at least one CG resource. Here, the third calculation formula is expressed as follows: O=N*K*L*M, where M represents the quantity of valid transmission occasions in the at least one CG resource.

In another implementation, a fourth calculation formula may be used to calculate the quantity of valid transmission slots in the at least one CG resource. Here, the fourth calculation formula is expressed as follows: O=K*L*M.

In another implementation, a fifth calculation formula may be used to calculate the quantity of valid transmission slots in the at least one CG resource. Here, the fifth calculation formula is expressed as follows: O=N*K*M.

In another implementation, a sixth calculation formula may be used to calculate the quantity of valid transmission slots in the at least one CG resource. Here, the sixth calculation formula is expressed as follows: O=K*M.

In yet another implementation, a seventh calculation formula may be used to calculate the quantity of valid transmission slots in the at least one CG resource. Here, the seventh calculation formula is expressed as follows: O=N*K*L-J1, where J1 represents the quantity of slots where there is a conflict between downlink symbols and transmission occasions.

In yet another implementation, an eighth calculation formula may be used to calculate the quantity of valid transmission slots in the at least one CG resource. Here, the eighth calculation formula is expressed as follows: O=K*L-J1.

In yet another implementation, a ninth calculation formula may be used to calculate the quantity of valid transmission slots in the at least one CG resource. Here, the ninth calculation formula is expressed as follows: O=L-J1.

In another implementation, a tenth calculation formula may be used to calculate the quantity of valid transmission slots in the at least one CG resource. Here, the tenth calculation formula is expressed as follows: $O = \sum_{i=0}^{L-1} K_i$ or

$$O1 = \sum_{i=1}^{L} K_i$$ , where Ki represents the quantity of repetitions corresponding to transmission occasion i.

In another implementation, an eleventh calculation formula may be used to calculate the quantity of valid transmission slots in the at least one CG resource. Here, the eleventh calculation formula is expressed as follows:

$$O = \sum_{i=0}^{L-1} N * K_i \quad \text{or} \quad O = \sum_{i=1}^{L} N * K_i .$$

In yet another implementation, a twelfth calculation formula may be used to calculate the quantity of valid transmission slots in the at least one CG resource. Here, the twelfth calculation formula is expressed as follows: O=N*K* (L-J1).

In yet another implementation, a thirteenth calculation formula may be used to calculate the quantity of valid transmission slots in the at least one CG resource. Here, the thirteenth calculation formula is expressed as follows: O=K* (L-J1).

To further improve the accuracy of uplink grant-free resource configuration, in some embodiments of the present disclosure, the terminal device may determine at least one valid transmission slot for the at least one CG resource corresponding to the at least one CG configuration according to the uplink-downlink transmission configuration parameter and the quantity of valid transmission slots in the at least one CG resource. That is, the terminal device may determine at least one valid transmission slot for the at least one CG resource corresponding to the at least one CG configuration by combining the quantity of valid transmission slots in the at least one CG resource with the uplink-downlink transmission configuration parameter.

Optionally, in the embodiments of the present disclosure, the terminal device may determine at least one valid transmission slot for the at least one CG resource corresponding to the at least one CG configuration by using a preset configuration manner according to the uplink-downlink transmission configuration parameter and the quantity of valid transmission slots in the at least one CG resource, where the preset configuration manner includes any one of the following: a first configuration manner, a second configuration manner. As an example, it may be agreed in the protocol that the terminal device uses a preset configuration manner (such as the first configuration manner or the second configuration manner) to determine at least one valid transmission slot for the at least one CG resource corresponding to the at least one CG configuration.

Here, the first configuration manner is predefined in the protocol as follows:

If resources are confirmed according to the resource allocation method of multiple CG PUSCH transmission occasions within a CG period (multi-PUSCHs CG), and at least one symbol in a slot meets at least one of the following conditions, then the slot cannot be configured as a transmission occasion:

Condition 1: the at least one symbol overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: the at least one symbol overlaps with a synchronization signal (SS)/physical broadcast channel (PBCH) block symbol provided by the uplink-downlink transmission configuration parameter, where the uplink-downlink transmission configuration parameter is parameter ssb-PositionsInBurst.

As an example of a possible implementation, if the preset configuration manner agreed in the protocol is the first configuration manner, the terminal device may determine at least one valid transmission slot for the at least one CG resource corresponding to the at least one CG configuration by using the first configuration manner according to the uplink-downlink transmission configuration parameter and the quantity of valid transmission slots in the at least one CG resource.

In an embodiment, if resources are confirmed according to the resource allocation method of multi-PUSCHs CG and at least one symbol in a slot overlaps with a downlink symbol indicated by the parameter tdd-UL-DL-ConfigurationCommon or tdd-UL-DL-ConfigurationDedicated, or with an SS/PBCH block symbol provided by ssb-PositionsInBurst, then this slot does not belong to a valid transmission slot, and the next slot is continuously determined as to whether it belongs to a valid transmission slot, until the quantity of determined valid transmission slots reaches the quantity of valid transmission slots O in the at least one CG resource. That is, if resources are confirmed according to the resource allocation method of multi-PUSCHs CG and at least one symbol in a slot overlaps with a downlink symbol indicated by the parameter tdd-UL-DL-ConfigurationCommon or tdd-UL-DL-ConfigurationDedicated, or with an SS/PBCH block symbol provided by ssb-PositionsInBurst, then no transmission occasion (TO) is configured for this slot, and it continues to determine whether the next slot may be configured with a transmission occasion TO. That is, the terminal device uses the first configuration manner to configure M valid transmission occasions, and the transmission occasions TO that conflict with downlink symbols are directly delayed, and the final valid transmission occasions are also M.

In another implementation, if resources are confirmed according to the resource allocation method of multi-PUSCHs CG and at least one symbol in a slot overlaps with an SS/PBCH block symbol provided by ssb-PositionsInBurst, then this slot does not belong to a valid transmission slot, and the next slot is continuously determined as to whether it belongs to a valid transmission slot, until the quantity of determined valid transmission slots reaches the quantity of valid transmission slots O in the at least one CG resource. That is, if resources are confirmed according to the resource allocation method of multi-PUSCHs CG and at least one symbol in a slot overlaps with an SS/PBCH block symbol provided by ssb-PositionsInBurst, then no transmission occasion (TO) is configured for this slot, and it continues to determine whether the next slot may be configured with a transmission occasion TO. That is, the terminal device uses the first configuration manner to configure M valid transmission occasions, and the transmission occasions TO that conflict with downlink symbols are directly delayed, and the final valid transmission occasions are also M.

For example, the quantity of valid transmission slots O in the at least one CG resource is 5. As shown in FIG. 3b, the terminal device uses the first configuration manner to determine that slot 1, slot 2, slot 3, and slot 4 are all valid transmission slots. Using the first configuration manner, it determines that at least one symbol in slot 5 overlaps with a downlink symbol indicated by the uplink-downlink transmission configuration parameter, so the terminal device will determine whether the next slot after slot 5 (i.e., slot 6) is a valid transmission slot, and determines that slot 6 is a valid transmission slot. Thus, the terminal device may independently perform an uplink transmission on these 5 valid transmission slots (i.e., slot 1, slot 2, slot 3, slot 4, and slot 6).

As an example of a possible implementation, if the preset configuration manner agreed in the protocol is the second configuration manner, the terminal device may determine at least one valid transmission slot for the at least one CG resource corresponding to the at least one CG configuration by using the second configuration manner according to the uplink-downlink transmission configuration parameter and the quantity of valid transmission slots in the at least one CG resource.

Here, the second configuration manner is predefined in the protocol as follows:

If resources are confirmed according to the resource allocation method of multiple CG PUSCH transmission occasions within a CG period (multi-PUSCHs CG), and at least one symbol in a slot meets at least one of the following conditions, then the uplink grant-free transmission occasion (TO) conflicting with the slot is discarded:

Condition 1: the at least one symbol overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: the at least one symbol overlaps with an SS/PBCH block symbol provided by the uplink-downlink transmission configuration parameter, where the uplink-downlink transmission configuration parameter is parameter ssb-PositionsInBurst.

In an embodiment, the protocol predefines that the terminal device is not expected to perform an uplink transmission on a transmission occasion that meets at least one of the following conditions: at least one symbol overlaps with a downlink symbol indicated by tdd-UL-DL-ConfigurationCommon; at least one symbol overlaps with a downlink symbol indicated by tdd-UL-DL-ConfigurationDedicated; at least one symbol overlaps with an SS/PBCH block symbol provided by ssb-PositionsInBurst. For example, if in a slot, when resources are confirmed according to the resource allocation method of multi-PUSCHs CG, there is at least one symbol that overlaps with a downlink symbol indicated by the parameter tdd-UL-DL-ConfigurationCommon or tdd-UL-DL-ConfigurationDedicated, or at least one symbol that overlaps with an SS/PBCH block symbol provided by ssb-PositionsInBurst, then the TO conflicting with that slot is discarded.

In an embodiment, the protocol predefines that the terminal device expects that the transmission occasions in the at least one CG period configured by the network device shall not exhibit at least one of the following situations: at least one symbol overlaps with a downlink symbol indicated by tdd-UL-DL-ConfigurationCommon; at least one symbol overlaps with a downlink symbol indicated by tdd-UL-DL-ConfigurationDedicated; at least one symbol overlaps with an SS/PBCH block symbol provided by ssb-PositionsInBurst.

For example, the network configures M valid transmission occasions for the terminal device. When the terminal device uses the second configuration manner to determine these M valid transmission occasions, if there are 3 transmission occasions that conflict with downlink symbols, the actual valid transmission occasions are N-3. That is, the terminal device may independently perform an uplink transmission on these consecutive N-3 transmission occasions.

For example, the quantity of valid transmission slots O in the at least one CG resource is 5. As shown in FIG. 3c, the terminal device uses the second configuration manner to determine that slot 1, slot 2, slot 3, and slot 4 are all valid transmission slots. Using the second configuration manner, it determines that at least one symbol in slot 5 overlaps with a downlink symbol indicated by the uplink-downlink transmission configuration parameter, so the terminal device discards the TO conflicting with slot 5, i.e., the actual quantity of valid transmission slots is 4. Thus, the terminal device may independently perform an uplink transmission on these consecutive 4 valid transmission slots (i.e., slot 1, slot 2, slot 3, and slot 4).

In some embodiments of the present disclosure, the terminal device may determine the quantity of valid transmission occasions in the at least one CG resource according to the configuration information, and determine at least one valid transmission occasion for the at least one CG resource corresponding to the at least one CG configuration according to the uplink-downlink transmission configuration parameter and the quantity of valid transmission occasions in the at least one CG resource. That is, the terminal device may determine at least one valid transmission occasion for the at least one CG resource corresponding to the at least one CG configuration by combining the quantity of valid transmission occasions in the at least one CG resource with the uplink-downlink transmission configuration parameter. Here, the configuration information may include at least one of the following: the quantity of slots occupied by the TBS, the quantity of repetitions of transmission occasions in the at least one CG resource, the quantity of transmission occasions configured in the at least one CG resource, and the quantity of transmission occasions that conflict with downlink symbols.

In the embodiments of the present disclosure, the quantity of valid transmission occasions in the at least one CG resource may be determined by at least one of the following: the quantity of slots occupied by the TBS, the quantity of repetitions of transmission occasions in the at least one CG resource, or the quantity of transmission occasions configured within the at least one CG resource.

In an embodiment, a first calculation formula may be used to calculate the quantity of valid transmission occasions in the at least one CG resource. Here, the first calculation formula is expressed as follows: OI=NKL, where O1 represents the quantity of valid transmission occasions in the at least one CG resource, N represents the quantity of slots occupied by the TBS, K represents the quantity of repetitions of transmission occasions in the at least one CG resource, and L represents the quantity of transmission occasions configured within the at least one CG resource.

In another implementation, a second calculation formula may be used to calculate the quantity of valid transmission occasions in the at least one CG resource. Here, the second calculation formula is expressed as follows: O1=K*L.

In yet another implementation, a third calculation formula may be used to calculate the quantity of valid transmission occasions in the at least one CG resource. Here, the third calculation formula is expressed as follows: O1=N*K*L-J, where J represents the quantity of transmission occasions that conflict with downlink symbols.

In yet another implementation, a fourth calculation formula may be used to calculate the quantity of valid transmission occasions in the at least one CG resource. Here, the fourth calculation formula is expressed as follows: O1=K*L-J.

In yet another implementation, a fifth calculation formula may be used to calculate the quantity of valid transmission occasions in the at least one CG resource. Here, the fifth calculation formula is expressed as follows: OI=L-J.

In another implementation, a sixth calculation formula may be used to calculate the quantity of valid transmission occasions in the at least one CG resource. Here, the sixth calculation formula is expressed as follows: $O1 = \sum_{i=0}^{L-1} K_i$ or $O1 = \sum_{i=1}^{L} K_i$, where Ki represents the quantity of repetitions corresponding to transmission occasion i.

In another implementation, a seventh calculation formula may be used to calculate the quantity of valid transmission occasions in the at least one CG resource. Here, the seventh calculation formula is expressed as follows:

$$O1 = \sum_{i=0}^{L-1} N * K_i \quad \text{or} \quad O1 = \sum_{i=1}^{L} N * K_i.$$

In yet another implementation, an eighth calculation formula may be used to calculate the quantity of valid transmission occasions in the at least one CG resource. Here, the eighth calculation formula is expressed as follows: O1=N*K* (L-J) , where J represents the quantity of transmission occasions that conflict with downlink symbols.

In yet another implementation, a ninth calculation formula may be used to calculate the quantity of valid transmission occasions in the at least one CG resource. Here, the ninth calculation formula is expressed as follows: O1=K*(L-J).

Optionally, in the embodiments of the present disclosure, the terminal device may determine at least one valid transmission occasion for the at least one CG resource corresponding to the at least one CG configuration by using a preset configuration manner according to the uplink-downlink transmission configuration parameter and the quantity of valid transmission occasions in the at least one CG resource, where the preset configuration manner includes any one of the following: a first configuration manner, a second configuration manner. As an example, it may be agreed in the protocol that the terminal device uses a preset configuration manner (such as the first configuration manner or the second configuration manner) to determine at least one valid transmission occasion for the at least one CG resource corresponding to the at least one CG configuration.

Here, the first configuration manner is predefined in the protocol as follows:

If resources are confirmed according to the resource allocation method of multiple CG PUSCH transmission occasions within a CG period (multi-PUSCHs CG) in a transmission occasion, and at least one symbol in the transmission occasion meets at least one of the following conditions, then the transmission occasion is postponed:

Condition 1: at least one symbol in the transmission occasion overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: at least one symbol in the transmission occasion overlaps with a synchronization signal (SS)/physical broadcast channel (PBCH) block symbol provided by the uplink-downlink transmission configuration parameter, where the uplink-downlink transmission configuration parameter is parameter ssb-PositionsInBurst.

As an example of a possible implementation, if the preset configuration manner agreed in the protocol is the first configuration manner, the terminal device may determine at least one valid transmission occasion for the at least one CG resource corresponding to the at least one CG configuration by using the first configuration manner according to the uplink-downlink transmission configuration parameter and the quantity of valid transmission occasions in the at least one CG resource.

In an embodiment, if resources are confirmed according to the resource allocation method of multi-PUSCHs CG in a transmission occasion and at least one symbol in the transmission occasion overlaps with a downlink symbol indicated by the parameter tdd-UL-DL-ConfigurationCommon or tdd-UL-DL-ConfigurationDedicated, or with an SS/PBCH block symbol provided by ssb-PositionsInBurst, then this transmission occasion does not belong to a valid transmission occasion, and the next transmission occasion is continuously determined as to whether it belongs to a valid transmission occasion, until the quantity of determined valid transmission occasions reaches the quantity of valid transmission occasions OI in the at least one CG resource.

In another implementation, if resources are confirmed according to the resource allocation method of multi-PUSCHs CG in a transmission occasion and at least one symbol in the transmission occasion overlaps with an SS/PBCH block symbol provided by ssb-PositionsInBurst, then this transmission occasion does not belong to a valid transmission occasion, and the next transmission occasion is continuously determined as to whether it belongs to a valid transmission occasion, until the quantity of determined valid transmission occasions reaches the quantity of valid transmission occasions OI in the at least one CG resource.

As an example of a possible implementation, if the preset configuration manner agreed in the protocol is the second configuration manner, the terminal device may determine at least one valid transmission occasion for the at least one CG resource corresponding to the at least one CG configuration by using the second configuration manner according to the uplink-downlink transmission configuration parameter and the quantity of valid transmission occasions in the at least one CG resource.

Here, the second configuration manner is predefined in the protocol as follows:

If resources are confirmed according to the resource allocation method of multiple CG PUSCH transmission occasions within a CG period (multi-PUSCHs CG) in a transmission occasion, and at least one symbol in the transmission occasion meets at least one of the following conditions, then the uplink grant-free transmission occasion (TO) conflicting with the slot is discarded:

Condition 1: at least one symbol in the transmission occasion overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: at least one symbol in the transmission occasion overlaps with an SS/PBCH block symbol provided by the uplink-downlink transmission configuration parameter, where the uplink-downlink transmission configuration parameter is parameter ssb-PositionsInBurst.

In an embodiment, the protocol predefines that the terminal device is not expected to perform an uplink transmission on a transmission occasion that meets at least one of the following conditions: at least one symbol overlaps with a downlink symbol indicated by tdd-UL-DL-ConfigurationCommon; at least one symbol overlaps with a downlink symbol indicated by tdd-UL-DL-ConfigurationDedicated; at least one symbol overlaps with an SS/PBCH block symbol provided by ssb-PositionsInBurst. For example, if when resources are confirmed according to the resource allocation method of multi-PUSCHs CG, there is at least one symbol that overlaps with a downlink symbol indicated by the parameter tdd-UL-DL-ConfigurationCommon or tdd-UL-DL-ConfigurationDedicated, or at least one symbol that overlaps with an SS/PBCH block symbol provided by ssb-PositionsInBurst, then this TO is discarded.

In an embodiment, the protocol predefines that the terminal device expects that the transmission occasions in the at least one CG period configured by the network device shall not exhibit at least one of the following situations: at least one symbol overlaps with a downlink symbol indicated by tdd-UL-DL-ConfigurationCommon; at least one symbol overlaps with a downlink symbol indicated by tdd-UL-DL-ConfigurationDedicated; at least one symbol overlaps with an SS/PBCH block symbol provided by ssb-PositionsInBurst.

It should be noted that the present disclosure may configure, through the network device, which configuration manner the terminal device uses to configure the transmission occasions of the at least one CG resource. Optionally, in some embodiments of the present disclosure, the terminal device may receive first information sent by the network device. Here, the first information includes a first parameter, and the first parameter is used to instruct the terminal device to use a target configuration manner to configure the transmission occasions of the at least one CG resource, where the target configuration manner includes any one of the following: a first configuration manner, a second configuration manner. The terminal device may determine at least one valid transmission slot for the at least one CG resource corresponding to the at least one CG configuration by using the target configuration manner according to the first parameter, the uplink-downlink transmission configuration parameter, and the quantity of valid transmission slots in the at least one CG resource. As an example, the first information may be DCI, or the first information may be carried in DCI.

In an embodiment, if the terminal device determines that the first parameter is a first value, then the terminal device determines at least one valid transmission slot for the at least one CG resource corresponding to the at least one CG configuration by using the first configuration manner according to the uplink-downlink transmission configuration parameter and the quantity of valid transmission slots in the at least one CG resource. Here, the first value may be enable, or may be another value, such as a Boolean value. The present disclosure does not limit this and will not elaborate further. For example, if the first parameter is enable, the terminal device will perform transport block (TB) transmission in the valid transmission slots. For the first configuration manner and the implementation manner of using the first configuration manner to determine at least one valid transmission slot for the at least one CG resource corresponding to the at least one CG configuration reference may be made to the relevant descriptions in the foregoing embodiments and will details not be repeated here.

In another implementation, if the terminal device determines that the first parameter is not the first value, then the terminal device determines at least one valid transmission slot for the at least one CG resource corresponding to the at least one CG configuration by using the second configuration manner according to the uplink-downlink transmission configuration parameter and the quantity of valid transmission slots in the at least one CG resource. That is, if the terminal device determines that the first parameter is not the first value, such as not enable, then the terminal device determines at least one valid transmission slot for the at least one CG resource corresponding to the at least one CG configuration by using the second configuration manner according to the uplink-downlink transmission configuration parameter and the quantity of valid transmission slots in the at least one CG resource. For the second configuration manner and the implementation manner of using the second configuration manner to determine at least one valid transmission slot for the at least one CG resource corresponding to the at least one CG configuration reference may be made to the relevant descriptions in the foregoing embodiments and details will not be repeated here.

Optionally, in some embodiments of the present disclosure, the terminal device may receive first information sent by the network device. Here, the first information includes a first parameter, and the first parameter is used to instruct the terminal device to use a target configuration manner to configure the transmission occasions of the at least one CG resource, where the target configuration manner includes any one of the following: a first configuration manner, a second configuration manner. The terminal device may determine at least one valid transmission occasion for the at least one CG resource corresponding to the at least one CG configuration by using the target configuration manner according to the first parameter, the uplink-downlink transmission configuration parameter, and the quantity of valid transmission occasions in the at least one CG resource. As an example, the first information may be DCI, or the first information may be carried in DCI.

In an embodiment, if the terminal device determines that the first parameter is a first value, then the terminal device determines at least one valid transmission occasion for the at least one CG resource corresponding to the at least one CG configuration by using the first configuration manner according to the uplink-downlink transmission configuration parameter and the quantity of valid transmission occasions in the at least one CG resource. Here, the first value may be enable, or may be another value, such as a Boolean value. The present disclosure does not limit this and will not elaborate further. For example, if the first parameter is enable, the terminal device will perform transport block (TB) transmission in the valid transmission occasions. For the first configuration manner and the implementation manner of using the first configuration manner to determine at least one valid transmission occasion for the at least one CG resource corresponding to the at least one CG configuration reference may be made to the relevant descriptions in the foregoing embodiments and details will not be repeated here.

In another implementation, if the terminal device determines that the first parameter is not the first value, then the terminal device determines at least one valid transmission occasion for the at least one CG resource corresponding to the at least one CG configuration by using the second configuration manner according to the uplink-downlink transmission configuration parameter and the quantity of valid transmission occasions in the at least one CG resource. That is, if the terminal device determines that the first parameter is not the first value, such as not enable, then the terminal device determines at least one valid transmission occasion for the at least one CG resource corresponding to the at least one CG configuration by using the second configuration manner according to the uplink-downlink transmission configuration parameter and the quantity of valid transmission occasions in the at least one CG resource. For the second configuration manner and the implementation manner of using the second configuration manner to determine at least one valid transmission occasion for the at least one CG resource corresponding to the at least one CG configuration reference may be made to the relevant descriptions in the foregoing embodiments and details will not be repeated here.

It should be noted that the present disclosure may configure, through the network device, whether the terminal device uses the first configuration manner to configure the transmission occasions of the at least one CG resource. Optionally, in some embodiments of the present disclosure, the terminal device receives second information sent by the network device; where the second information includes a second parameter, and the second parameter is used to indicate whether the terminal device uses the first configuration manner to configure the transmission occasions of the CG resource. The terminal device determines that the second parameter is a third value; the terminal device determines at least one valid transmission slot for the at least one CG resource corresponding to the at least one CG configuration by using the first configuration manner according to the uplink-downlink transmission configuration parameter and the quantity of valid transmission slots in the at least one CG resource. As an example, the second information may be DCI, or the second information may be carried in DCI.

As an example, the third value may be enable, or may be another value, such as a Boolean value. The present disclosure does not limit this and will not elaborate further. For example, if the second parameter is enable, the terminal device determines at least one valid transmission slot for the at least one CG resource corresponding to the at least one CG configuration by using the first configuration manner according to the uplink-downlink transmission configuration parameter and the quantity of valid transmission slots in the at least one CG resource. For the first configuration manner and the implementation manner of using the first configuration manner to determine at least one valid transmission slot for the at least one CG resource corresponding to the at least one CG configuration reference may be made to the relevant descriptions in the foregoing embodiments and details will not be repeated here.

Optionally, in some embodiments of the present disclosure, the terminal device receives second information sent by the network device; where the second information includes a second parameter, and the second parameter is used to indicate whether the terminal device uses the first configuration manner to configure the transmission occasions of the CG resource. The terminal device determines that the second parameter is a third value; the terminal device determines at least one valid transmission occasion for the at least one CG resource corresponding to the at least one CG configuration by using the first configuration manner according to the uplink-downlink transmission configuration parameter and the quantity of valid transmission occasions in the at least one CG resource. As an example, the second information may be DCI, or the second information may be carried in DCI.

As an example, the third value may be enable, or may be another value, such as a Boolean value. The present disclosure does not limit this and will not elaborate further. For example, if the second parameter is enable, the terminal device determines at least one valid transmission occasion for the at least one CG resource corresponding to the at least one CG configuration by using the first configuration manner according to the uplink-downlink transmission configuration parameter and the quantity of valid transmission occasions in the at least one CG resource. For the first configuration manner and the implementation manner of using the first configuration manner to determine at least one valid transmission occasion for the at least one CG resource corresponding to the at least one CG configuration reference may be made to the relevant descriptions in the foregoing embodiments and details will not be repeated here.

It is worth noting that since the number of TOs configured within at least one CG period may be greater than 1, the calculation formula for the Hybrid Automatic Repeat reQuest (HARQ) process ID in the related art may have ambiguity in ID assignment. To this end, the embodiments of the present disclosure need to determine the HARQ process ID corresponding to the CG PUSCH in each transmission TO. Optionally, in some embodiments of the present disclosure, the method for determining an uplink grant-free resource may further include the following step 301'. In step 301', a process calculation formula is used to obtain the HARQ process identifier (ID) used for the first transmission in the at least one CG resource. Here, the transmission may be a Physical Uplink Shared Channel (PUSCH).

In Embodiment 1, the HARQ processing ID of the first PUSCH within the at least one CG resource is determined by X, CURRENT_symbol, offset1, periodicity, offset2, nrofHARQ-Processes. Here, X represents the quantity of TOs within the resource; offset1 and offset2 are integer values; CURRENT_symbol refers to the current symbol, determined by parameters such as the radio frame number, the starting symbol of the PUSCH in the slot, the number of slots within the radio frame, and the number of time-domain symbols within the slot; periodicity is the period of the CG configuration; nrofHARQ-Processes is the number of HARQ processes for SPS. As an example, the process calculation formula may be used to calculate the HARQ processing ID of the first PUSCH within the at least one CG resource. The process calculation formula is expressed as follows:

HARQ Process ID = [floor(X*(CURRENT_symbol -- offset1) / periodicity) + offset2] modulo nrofHARQ-Processes;

or the process calculation formula is expressed as follows:

HARQ Process ID = [X*floor( (CURRENT_symbol -- offset1) / periodicity) + offset2] modulo nrofHARQ-Processes.

In Embodiment 2, the HARQ processing ID of the first PUSCH within the at least one CG resource is determined by X, CURRENT _symbol, offset1, periodicity, offset2, nrofHARQ-Processes, harq-ProcID-Offset2; where harq-ProcID-Offset2 is the HARQ processing ID offset for CG configuration without retransmission timing configuration. As an example, the process calculation formula may be used to calculate the HARQ processing ID of the first PUSCH within the at least one CG resource. The process calculation formula is expressed as follows:

HARQ Process ID = [floor(X*(CURRENT_symbol -- offset1) / periodicity) + offset2] modulo nrofHARQ-Processes + harq-ProcID-Offset2;

or the process calculation formula is expressed as follows:

HARQ Process ID = [X*floor((CURRENT_symbol -- offset1) / periodicity) + offset2] modulo nrofHARQ-Processes + harq-ProcID-Offset2.

In Embodiment 3, the HARQ processing ID of the first PUSCH within the at least one CG resource is determined by CURRENT_symbol, offset1, periodicity, offset2, nrofHARQ-Processes. As an example, the process calculation formula may be used to calculate the HARQ processing ID of the first PUSCH within the at least one CG resource. The process calculation formula is expressed as follows:

HARQ Process ID = [floor( (CURRENT_symbol -- offset1) / periodicity) + offset2] modulo nrofHARQ-Processes.

In Embodiment 4, the HARQ processing ID of the first PUSCH within the at least one CG resource is determined by CURRENT_symbol, offset1, periodicity, offset2, nrofHARQ-Processes, harq-ProcID-Offset2. As an example, the process calculation formula may be used to calculate the HARQ processing ID of the first PUSCH within the at least one CG resource. The process calculation formula is expressed as follows:

HARQ Process ID = [floor( (CURRENT_symbol -- offset1) / periodicity) + offset2] modulo nrofHARQ-Processes + harq-ProcID-Offset2.

In Embodiment 5, the HARQ processing ID of the first PUSCH within the at least one CG resource is determined by X, CURRENT_symbol, periodicity, offset2, nrofHARQ-Processes. As an example, the process calculation formula may be used to calculate the HARQ processing ID of the first PUSCH within the at least one CG resource. The process calculation formula is expressed as follows:

HARQ Process ID = [X*floor((CURRENT_symbol) / periodicity) + offset2] modulo nrofHARQ-Processes;

or the process calculation formula is expressed as follows:

HARQ Process ID = [floor(X*(CURRENT_symbol) / periodicity) + offset2] modulo nrofHARQ-Processes.

In Embodiment 6, the HARQ processing ID of the first PUSCH within the at least one CG resource is determined by X, CURRENT_symbol, periodicity, offset2, nrofHARQ-Processes, harq-ProcID-Offset2. As an example, the process calculation formula may be used to calculate the HARQ processing ID of the first PUSCH within the at least one CG resource. The process calculation formula is expressed as follows:
HARQ Process ID = [floor(X*(CURRENT_symbol) / periodicity) + offset2] modulo nrofHARQ-Processes + harq-ProcID-Offset2;
or the process calculation formula is expressed as follows:

HARQ Process ID = [X*floor( (CURRENT_symbol) / periodicity) + offset2] modulo nrofHARQ-Processes + harq-ProcID-Offset2.

In Embodiment 7, the HARQ processing ID of the first PUSCH within the at least one CG resource is determined by X, CURRENT_symbol, offset1, periodicity, nrofHARQ-Processes. As an example, the process calculation formula may be used to calculate the HARQ processing ID of the first PUSCH within the at least one CG resource. The process calculation formula is expressed as follows:

HARQ Process ID = [floor(X*(CURRENT_symbol -- offset1) / periodicity)] modulo nrofHARQ-Processes;

or the process calculation formula is expressed as follows:

HARQ Process ID = [X*floor( (CURRENT_symbol -- offset1) / periodicity)] modulo nrofHARQ-Processes.

In Embodiment 8, the HARQ processing ID of the first PUSCH within the at least one CG resource is determined by X, CURRENT_symbol, offset1, periodicity, nrofHARQ-Processes, harq-ProcID-Offset2. As an example, the process calculation formula may be used to calculate the HARQ processing ID of the first PUSCH within the at least one CG resource. The process calculation formula is expressed as follows:

HARQ Process ID = [floor(X*(CURRENT_symbol -- offset1) / periodicity)] modulo nrofHARQ-Processes + harq-ProcID-Offset2;

or the process calculation formula is expressed as follows:

HARQ Process ID = [X*floor((CURRENT_symbol -- offset1) / periodicity)] modulo nrofHARQ-Processes + harq-ProcID-Offset2.

In Embodiment 9, the HARQ processing ID of the first PUSCH within the at least one CG resource is determined by CURRENT_symbol, offset1, periodicity, nrofHARQ-Processes. As an example, the process calculation formula may be used to calculate the HARQ processing ID of the first PUSCH within the at least one CG resource. The process calculation formula is expressed as follows:

HARQ Process ID = [floor( (CURRENT_symbol -- offset1) / periodicity)] modulo nrofHARQ-Processes.

In Embodiment 10, the HARQ processing ID of the first PUSCH within the at least one CG resource is determined by CURRENT_symbol, offset1, periodicity, nrofHARQ-Processes, harq-ProcID-Offset2. As an example, the process calculation formula may be used to calculate the HARQ processing ID of the first PUSCH within the at least one CG resource. The process calculation formula is expressed as follows:

HARQ Process ID = [floor( (CURRENT_symbol -- offset1) / periodicity)] modulo nrofHARQ-Processes + harq-ProcID-Offset2.

In Embodiment 11, the HARQ processing ID of the first PUSCH within the at least one CG resource is determined by CURRENT_symbol, offset2, periodicity, nrofHARQ-Processes. As an example, the process calculation formula may be used to calculate the HARQ processing ID of the first PUSCH within the at least one CG resource. The process calculation formula is expressed as follows:

HARQ Process ID = [floor( (CURRENT_symbol) / periodicity) + offset2] modulo nrofHARQ-Processes.

In Embodiment 12, the HARQ processing ID of the first PUSCH within the at least one CG resource is determined by CURRENT_symbol, offset2, periodicity, nrofHARQ-Processes, harq-ProcID-Offset2. As an example, the process calculation formula may be used to calculate the HARQ processing ID of the first PUSCH within the at least one CG resource. The process calculation formula is expressed as follows:

HARQ Process ID = [floor( (CURRENT_symbol) / periodicity) + offset2] modulo nrofHARQ-Processes + harq-ProcID-Offset2.

In Embodiment 13, the HARQ processing ID of the first PUSCH within the at least one CG resource is determined by X, CURRENT_symbol, periodicity, nrofHARQ-Processes. As an example, the process calculation formula may be used to calculate the HARQ processing ID of the first PUSCH within the at least one CG resource. The process calculation formula is expressed as follows:

HARQ Process ID = [floor(X*(CURRENT_symbol) / periodicity)] modulo nrofHARQ-Processes;

or the process calculation formula is expressed as follows:

HARQ Process ID = [X*floor((CURRENT_symbol) / periodicity)] modulo nrofHARQ-Processes.

In Embodiment 14, the HARQ processing ID of the first PUSCH within the at least one CG resource is determined by X, CURRENT_symbol, periodicity, nrofHARQ-Processes, harq-ProcID-Offset2. As an example, the process calculation formula may be used to calculate the HARQ processing ID of the first PUSCH within the at least one CG resource. The process calculation formula is expressed as follows:

HARQ Process ID = [floor(X*(CURRENT_symbol) / periodicity)] modulo nrofHARQ-Processes + harq-ProcID-Offset2;

or the process calculation formula is expressed as follows:

HARQ Process ID = [X*floor((CURRENT_symbol) / periodicity)] modulo nrofHARQ-Processes + harq-ProcID-Offset2.

Optionally, in the embodiments of the present disclosure, the cumulative value of the HARQ process ID in the at least one CG resource does not exceed M, where M is any one of the following values: 16, 32, 64. For example, the terminal device expects that the cumulative value of the HARQ Process ID in one CG period does not exceed M, where M is preferably 16, 32, or 64. In an embodiment, the value of M is predefined in the protocol, and the terminal device may determine the HARQ Process ID used for the transmission in the at least one CG resource according to this predefined M value.

For another example, the terminal device is expected that the cumulative value of the HARQ Process ID in at least one CG period does not exceed M, where M is preferably 16, 32, or 64. In an embodiment, the network device may configure M for the terminal device, and the terminal device may determine the HARQ Process ID used for the transmission in the at least one CG resource according to the M configured by the network device.

It is worth noting that when the cumulative value of the HARQ process ID in the at least one CG resource reaches M, the HARQ process ID used for the remaining transmissions in the at least one CG resource needs to be recalculated to provide a corresponding HARQ process ID for each transmission. Optionally, in some embodiments of the present disclosure, if the cumulative value of the HARQ process ID in the at least one CG resource reaches M, then the HARQ process ID used for the first transmission in the remaining transmissions in the at least one CG resource may be calculated starting from n, where n is a natural number. As an example, n may be 1. For example, if M is 5, and the HARQ processing ID of the first PUSCH within the at least one CG resource calculated using the process calculation formula is 2, then the HARQ processing ID of the second PUSCH within the at least one CG resource is 3, the HARQ processing ID of the third PUSCH is 4, and the HARQ processing ID of the fourth PUSCH is 5. Thus, the cumulative value of the HARQ Process ID in the at least one CG resource reaches 5. Then, the HARQ process ID used for the first transmission in the remaining transmissions may be calculated starting from 1, i.e., the HARQ processing ID of the fifth PUSCH within the at least one CG resource is 1, the HARQ processing ID of the sixth PUSCH is 2, and so on, until all PUSCHs within the at least one CG resource have corresponding HARQ processing IDs.

In other embodiments of the present disclosure, if the cumulative value of the HARQ process ID in the at least one CG resource reaches M, then the above process calculation formula may be used to continue calculating the HARQ process ID used for the first transmission in the remaining transmissions in the at least one CG resource. For example, if M is 5, and the HARQ processing ID of the first PUSCH within the at least one CG resource calculated using the process calculation formula is 2, then the HARQ processing ID of the second PUSCH is 3, the HARQ processing ID of the third PUSCH is 4, and the HARQ processing ID of the fourth PUSCH is 5. Thus, the cumulative value of the HARQ Process ID in the at least one CG resource reaches 5. Then, the above process calculation formula may be used to continue calculating the HARQ process ID used for the first transmission in the remaining transmissions, i.e., the HARQ processing ID of the fifth PUSCH within the at least one CG resource is 2, the HARQ processing ID of the sixth PUSCH is 3, and so on, until all PUSCHs within the at least one CG resource have corresponding HARQ processing IDs.

By implementing the embodiments of the present disclosure, at least one valid transmission slot for the at least one CG resource corresponding to the at least one CG configuration may be determined according to the uplink-downlink transmission configuration parameter, which can support configuring at least one CG configuration in a TDD frame structure and solve the problem of conflict between multiple transmission occasions configured within at least one resource and downlink transmissions. In addition, a process calculation formula is provided to determine the HARQ processing ID of the first PUSCH within the at least one CG resource, so as to solve the problem of unclear HARQ process ID corresponding to the CG PUSCH transmitted in multiple transmission occasions configured within at least one CG period.

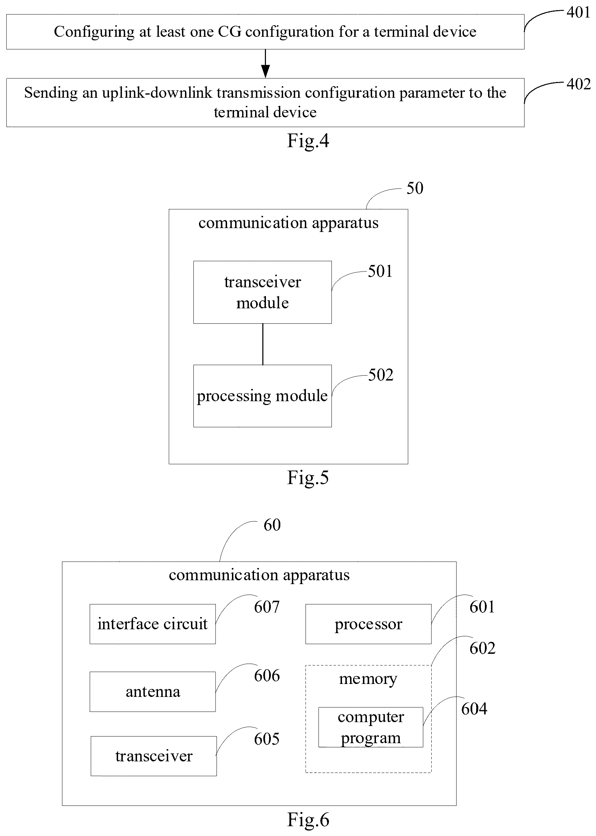

It is understandable that the above embodiments describe the implementation of the method for determining an uplink grant-free resource from the terminal device side. The embodiments of the present disclosure also propose a method for configuring an uplink grant-free resource. The implementation of this method will be described below from the network device side. Please refer to FIG. 4, which is a flowchart of a method for configuring an uplink grant-free resource provided by an embodiment of the present disclosure. It should be noted that the method may be performed by a network device. As shown in FIG. 4, the method may include, but is not limited to, the following steps.

In step 401, at least one CG configuration is configured for a terminal device.

In the embodiments of the present disclosure, the at least one CG configuration includes at least one CG resource, one CG resource corresponds to one CG configuration, and a CG resource may also be called a CG period. As an example, the network device may configure at least one CG configuration for the terminal device and send the at least one CG configuration to the terminal device.

In step 402, an uplink-downlink transmission configuration parameter is sent to the terminal device.

In the embodiments of the present disclosure, the uplink-downlink transmission configuration parameter is used for the terminal device to determine at least one valid transmission slot for the at least one CG resource corresponding to the at least one CG configuration, and one CG resource corresponds to one CG configuration.

It is worth noting that in a TDD system, the TDD frame structure includes downlink slots, flexible slots, and uplink slots. That is, TDD itself has configurations for downlink signals/downlink slots. The at least one CG configuration involved in the embodiments of the present disclosure considers the problem of overlap with the downlink (Downlink) configured by TDD during configuration. The network device performs TDD configuration through the uplink-downlink transmission configuration parameter. The network device sends the uplink-downlink transmission configuration parameter to the terminal device. In this way, the terminal device can determine at least one valid transmission slot for the at least one CG resource corresponding to the at least one CG configuration according to this uplink-downlink transmission configuration parameter. The implementation manner in which the terminal device determines at least one valid transmission slot for the at least one CG resource corresponding to the at least one CG configuration according to the uplink-downlink transmission configuration parameter may be implemented in any of the embodiments described on the terminal device side of the present disclosure, which is not limited here and will not be repeated.

Optionally, in some embodiments of the present disclosure, the network device may send configuration information to the terminal device; where the configuration information includes at least one of the following: the quantity of slots occupied by a TBS, the quantity of repetitions of transmission occasions in the at least one CG resource, the quantity of transmission occasions configured in the at least one CG resource, the quantity of valid transmission occasions in the at least one CG resource; where the configuration information is used for the terminal device to determine the quantity of valid transmission slots in the at least one CG resource. The terminal device may determine the quantity of valid transmission slots in the at least one CG resource according to this configuration information. In this way, the terminal device may determine at least one valid transmission slot for the at least one CG resource corresponding to the at least one CG configuration by combining the quantity of valid transmission slots in the at least one CG resource with the uplink-downlink transmission configuration parameter. The implementation manner in which the terminal device determines the quantity of valid transmission slots in the at least one CG resource according to the configuration information, and determines at least one valid transmission slot for the at least one CG resource corresponding to the at least one CG configuration by combining the quantity of valid transmission slots in the at least one CG resource with the uplink-downlink transmission configuration parameter may be implemented in any of the embodiments described on the terminal device side of the present disclosure, which is not limited here and will not be repeated.

Optionally, in some embodiments of the present disclosure, the network device sends first information to the terminal device; where the first information includes a first parameter, and the first parameter is used to instruct the terminal device to use a target configuration manner to configure the transmission occasions of the CG resource, the target configuration manner including any one of the following: a first configuration manner, a second configuration manner; where the first parameter is used for the terminal device to determine at least one valid transmission slot for the at least one CG resource corresponding to the at least one CG configuration by using the target configuration manner according to the uplink-downlink transmission configuration parameter and the quantity of valid transmission slots in the at least one CG resource. The terminal device may determine at least one valid transmission slot for the at least one CG resource corresponding to the at least one CG configuration by using the target configuration manner according to the first parameter, the uplink-downlink transmission configuration parameter, and the quantity of valid transmission slots in the at least one CG resource. The implementation manner in which the terminal device determines at least one valid transmission slot for the at least one CG resource corresponding to the at least one CG configuration by using the target configuration manner according to the first parameter, the uplink-downlink transmission configuration parameter, and the quantity of valid transmission slots in the at least one CG resource may be implemented in any of the embodiments described on the terminal device side of the present disclosure, which is not limited here and will not be repeated.

In an embodiment, the first configuration manner is predefined in the protocol as follows:

If resources are confirmed according to the resource allocation method of multiple CG PUSCH transmission occasions within a CG period (multi-PUSCHs CG) in a slot, and at least one symbol in the slot meets at least one of the following conditions, then the slot cannot be configured as a transmission occasion:

Condition 1: the at least one symbol in the slot overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: the at least one symbol in the slot overlaps with a synchronization signal (SS)/physical broadcast channel (PBCH) block symbol provided by the uplink-downlink transmission configuration parameter, where the uplink-downlink transmission configuration parameter is parameter ssb-PositionsInBurst.

In an embodiment, the second configuration manner is predefined in the protocol as follows:

If resources are confirmed according to the resource allocation method of multiple CG PUSCH transmission occasions within a CG period (multi-PUSCHs CG) in a slot, and at least one symbol in the slot meets at least one of the following conditions, then the uplink grant-free transmission occasion (TO) conflicting with the slot is discarded:

Condition 1: the at least one symbol in the slot overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: the at least one symbol in the slot overlaps with an SS/PBCH block symbol provided by the uplink-downlink transmission configuration parameter, where the uplink-downlink transmission configuration parameter is parameter ssb-PositionsInBurst.

Optionally, in some embodiments of the present disclosure, the network device may send second information to the terminal device; where the second information includes a second parameter, and the second parameter is used to indicate whether the terminal device uses the first configuration manner to configure the transmission occasions of the CG resource; where the second parameter is used for the terminal device to determine at least one valid transmission slot for the at least one CG resource corresponding to the at least one CG configuration by using the first configuration manner according to the uplink-downlink transmission configuration parameter and the quantity of valid transmission slots in the at least one CG resource. The implementation manner in which the terminal device determines at least one valid transmission slot for the at least one CG resource corresponding to the at least one CG configuration by using the first configuration manner according to the second parameter, the uplink-downlink transmission configuration parameter, and the quantity of valid transmission slots in the at least one CG resource may be implemented in any of the embodiments described on the terminal device side of the present disclosure, which is not limited here and will not be repeated.

In some embodiments of the present disclosure, the network device may configure at least one CG configuration for the terminal device and send an uplink-downlink transmission configuration parameter to the terminal device. In this way, the terminal device may determine at least one valid transmission occasion for the at least one CG resource corresponding to the at least one CG configuration according to this uplink-downlink transmission configuration parameter. The implementation manner in which the terminal device determines at least one valid transmission occasion for the at least one CG resource corresponding to the at least one CG configuration according to the uplink-downlink transmission configuration parameter may be implemented in any of the embodiments described on the terminal device side of the present disclosure, which is not limited here and will not be repeated.

Optionally, in some embodiments of the present disclosure, the network device may send configuration information to the terminal device; where the configuration information may include at least one of the following: the quantity of slots occupied by a TBS, the quantity of repetitions of transmission occasions in the at least one CG resource, the quantity of transmission occasions configured in the at least one CG resource, the quantity of transmission occasions that conflict with downlink symbols; where the configuration information is used for the terminal device to determine the quantity of valid transmission occasions in the at least one CG resource. The terminal device may determine the quantity of valid transmission occasions in the at least one CG resource according to this configuration information. In this way, the terminal device may determine at least one valid transmission occasion for the at least one CG resource corresponding to the at least one CG configuration by combining the quantity of valid transmission occasions in the at least one CG resource with the uplink-downlink transmission configuration parameter. The implementation manner in which the terminal device determines the quantity of valid transmission occasions in the at least one CG resource according to the configuration information, and determines at least one valid transmission occasion for the at least one CG resource corresponding to the at least one CG configuration by combining the quantity of valid transmission occasions in the at least one CG resource with the uplink-downlink transmission configuration parameter may be implemented in any of the embodiments described on the terminal device side of the present disclosure, which is not limited here and will not be repeated.

Optionally, in some embodiments of the present disclosure, the network device sends first information to the terminal device; where the first information includes a first parameter, and the first parameter is used to instruct the terminal device to use a target configuration manner to configure the transmission occasions of the CG resource, the target configuration manner including any one of the following: a first configuration manner, a second configuration manner; where the first parameter is used for the terminal device to determine at least one valid transmission occasion for the at least one CG resource corresponding to the at least one CG configuration by using the target configuration manner according to the uplink-downlink transmission configuration parameter and the quantity of valid transmission occasions in the at least one CG resource. The terminal device may determine at least one valid transmission occasion for the at least one CG resource corresponding to the at least one CG configuration by using the target configuration manner according to the first parameter, the uplink-downlink transmission configuration parameter, and the quantity of valid transmission occasions in the at least one CG resource. The implementation manner in which the terminal device determines at least one valid transmission occasion for the at least one CG resource corresponding to the at least one CG configuration by using the target configuration manner according to the first parameter, the uplink-downlink transmission configuration parameter, and the quantity of valid transmission occasions in the at least one CG resource may be implemented in any of the embodiments described on the terminal device side of the present disclosure, which is not limited here and will not be repeated.

In an embodiment, the first configuration manner is predefined in the protocol as follows:

If resources are confirmed according to the resource allocation method of multiple CG PUSCH transmission occasions within a CG period (multi-PUSCHs CG) in a transmission occasion, and at least one symbol in the transmission occasion meets at least one of the following conditions, then the transmission occasion is postponed:

Condition 1: at least one symbol in the transmission occasion overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: at least one symbol in the transmission occasion overlaps with a synchronization signal (SS)/physical broadcast channel (PBCH) block symbol provided by the uplink-downlink transmission configuration parameter, where the uplink-downlink transmission configuration parameter is parameter ssb-PositionsInBurst.

In an embodiment, the second configuration manner is predefined in the protocol as follows:

If resources are confirmed according to the resource allocation method of multiple CG PUSCH transmission occasions within a CG period (multi-PUSCHs CG) in a transmission occasion, and at least one symbol in the transmission occasion meets at least one of the following conditions, then the uplink grant-free transmission occasion (TO) conflicting with the slot is discarded:

Condition 1: at least one symbol in the transmission occasion overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: at least one symbol in the transmission occasion overlaps with an SS/PBCH block symbol provided by the uplink-downlink transmission configuration parameter, where the uplink-downlink transmission configuration parameter is parameter ssb-PositionsInBurst.

Optionally, in some embodiments of the present disclosure, the network device may send second information to the terminal device; where the second information includes a second parameter, and the second parameter is used to indicate whether the terminal device uses the first configuration manner to configure the transmission occasions of the CG resource; where the second parameter is used for the terminal device to determine at least one valid transmission occasion for the at least one CG resource corresponding to the at least one CG configuration by using the first configuration manner according to the uplink-downlink transmission configuration parameter and the quantity of valid transmission occasions in the at least one CG resource. The implementation manner in which the terminal device determines at least one valid transmission occasion for the at least one CG resource corresponding to the at least one CG configuration by using the first configuration manner according to the second parameter, the uplink-downlink transmission configuration parameter, and the quantity of valid transmission occasions in the at least one CG resource may be implemented in any of the embodiments described on the terminal device side of the present disclosure, which is not limited here and will not be repeated.

By implementing the embodiments of the present disclosure, the network device configures at least one CG configuration for the terminal device and may also send an uplink-downlink transmission configuration parameter to the terminal device, so that the terminal device can determine at least one valid transmission slot for the at least one CG resource corresponding to the at least one CG configuration according to the uplink-downlink transmission configuration parameter, which can support configuring at least one CG configuration in a TDD frame structure and solve the problem of conflict between multiple transmission occasions configured within at least one resource and downlink transmissions.

In the above embodiments provided by the present disclosure, the methods provided by the embodiments of the present disclosure are introduced from the perspectives of the network device and the terminal device, respectively. In order to implement the various functions in the methods provided by the embodiments of the present disclosure, the network device and the terminal device may include hardware structures and software modules, and may implement the above functions in the form of hardware structures, software modules, or hardware structures plus software modules. A certain function among the above functions may be executed in the manner of a hardware structure, a software module, or a hardware structure plus a software module.

Please refer to FIG. 5, which is a schematic structural diagram of a communication apparatus 50 provided by an embodiment of the present disclosure. The communication apparatus 50 shown in FIG. 5 may include a transceiver module 501 and a processing module 502. The transceiver module 501 may include a sending module and/or a receiving module, where the sending module is used to implement sending functionality, the receiving module is used to implement receiving functionality, and the transceiver module 501 may implement sending functionality and/or receiving functionality.

The communication apparatus 50 may be a terminal device, or may be an apparatus in a terminal device, or may be an apparatus that may be used in conjunction with a terminal device. Alternatively, the communication apparatus 50 may be a network device, or may be an apparatus in a network device, or may be an apparatus that may be used in conjunction with a network device.

When the communication apparatus 50 is a terminal device: the processing module 502 is configured to obtain at least one configured grant (CG) configuration. The processing module 502 is further configured to determine an uplink-downlink transmission configuration parameter configured by a network device. The processing module 502 is further configured to, according to the uplink-downlink transmission configuration parameter, determine at least one valid transmission slot for at least one CG resource corresponding to the at least one CG configuration; where one CG resource corresponds to one CG configuration.

In an embodiment, the transceiver module 501 is configured to receive configuration information sent by the network device; where the configuration information includes at least one of the following: a quantity of slots occupied by a transport block size (TBS), a quantity of repetitions of transmission occasions in the at least one CG resource, a quantity of transmission occasions configured in the at least one CG resource, a quantity of valid transmission occasions in the at least one CG resource. The processing module 502 is further configured to: according to the configuration information, determine a quantity of valid transmission slots in the at least one CG resource.

In an embodiment, the processing module 502 is further configured to: determine at least one valid transmission slot for the at least one CG resource corresponding to the at least one CG configuration according to the uplink-downlink transmission configuration parameter and the quantity of valid transmission slots in the at least one CG resource.

In an embodiment, the processing module 502 is further configured to: determine at least one valid transmission slot for the at least one CG resource corresponding to the at least one CG configuration in a preset configuration manner and according to the uplink-downlink transmission configuration parameter and the quantity of valid transmission slots in the at least one CG resource, where the preset configuration manner includes a first configuration manner or a second configuration manner.

In an embodiment, the processing module 502 is further configured to: receive first information sent by the network device; where the first information includes a first parameter, and the first parameter is used to instruct the terminal device to use a target configuration manner to configure the transmission occasions of the CG resource, the target configuration manner including a first configuration manner or a second configuration manner; determine at least one valid transmission slot for the at least one CG resource corresponding to the at least one CG configuration in the target configuration manner and according to the first parameter, the uplink-downlink transmission configuration parameter and the quantity of valid transmission slots in the at least one CG resource.

In an embodiment, the processing module 502 is further configured to: determine that the first parameter is a first value; determine at least one valid transmission slot for the at least one CG resource corresponding to the at least one CG configuration in the first configuration manner and according to the uplink-downlink transmission configuration parameter and the quantity of valid transmission slots in the at least one CG resource.

In an embodiment, the first configuration manner is predefined in the protocol as follows:

If resources are confirmed according to the resource allocation method of multiple CG PUSCH transmission occasions within a CG period (multi-PUSCHs CG) in a slot, and at least one symbol in the slot meets at least one of the following conditions, then the slot cannot be configured as a transmission occasion:

Condition 1: the at least one symbol in the slot overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: the at least one symbol in the slot overlaps with a synchronization signal (SS)/physical broadcast channel (PBCH) block symbol provided by the uplink-downlink transmission configuration parameter, where the uplink-downlink transmission configuration parameter is parameter ssb-PositionsInBurst.

In an embodiment, the processing module 502 is further configured to: determine that the first parameter is not a first value; determine at least one valid transmission slot for the at least one CG resource corresponding to the at least one CG configuration in the second configuration manner and according to the uplink-downlink transmission configuration parameter and the quantity of valid transmission slots in the at least one CG resource.

In an embodiment, the second configuration manner is predefined in the protocol as follows:

If resources are confirmed according to the resource allocation method of multiple CG PUSCH transmission occasions within a CG period (multi-PUSCHs CG) in a slot, and at least one symbol in the slot meets at least one of the following conditions, then the uplink grant-free transmission occasion (TO) conflicting with the slot is discarded:

Condition 1: the at least one symbol in the slot overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;
Condition 2: the at least one symbol in the slot overlaps with an SS/PBCH block symbol provided by the uplink-downlink transmission configuration parameter, where the uplink-downlink transmission configuration parameter is parameter ssb-PositionsInBurst.

In an embodiment, the processing module 502 is further configured to: receive second information sent by the network device; where the second information includes a second parameter, and the second parameter is used to indicate whether the terminal device uses the first configuration manner to configure the transmission occasions of the CG resource; determine that the second parameter is a third value; determine at least one valid transmission slot for the at least one CG resource corresponding to the at least one CG configuration in the first configuration manner and according to the uplink-downlink transmission configuration parameter and the quantity of valid transmission slots in the at least one CG resource.

In an embodiment, the processing module 502 is further configured to: use a process calculation formula to obtain a hybrid automatic repeat request (HARQ) process identifier (ID) used for the first transmission in the at least one CG resource.

In an embodiment, the cumulative value of the HARQ process ID in the at least one CG resource does not exceed M, where M is any one of the following values: 16, 32, 64.

In an embodiment, the processing module 502 is further configured to: if the cumulative value of the HARQ process ID in the at least one CG resource reaches M, then continue to calculate the HARQ process ID used for the remaining transmissions in the at least one CG resource starting from n, where n is a natural number; or, if the cumulative value of the HARQ process ID in the at least one CG resource reaches M, then continue to calculate the HARQ process ID used for the remaining transmissions in the at least one CG resource by using the process calculation formula.

When the communication apparatus 50 is a network device: the processing module 502 is configured to configure at least one configured grant (CG) configuration for a terminal device; the transceiver module 501 is configured to send an uplink-downlink transmission configuration parameter to the terminal device; where the uplink-downlink transmission configuration parameter is used for the terminal device to determine at least one valid transmission slot for the at least one CG resource corresponding to the at least one CG configuration, and one CG resource corresponds to one CG configuration.

In an embodiment, the transceiver module 501 is further configured to: send configuration information to the terminal device; where the configuration information includes at least one of the following: a quantity of slots occupied by a transport block size (TBS), a quantity of repetitions of transmission occasions in the at least one CG resource, a quantity of transmission occasions configured in the at least one CG resource, a quantity of valid transmission occasions in the at least one CG resource; where the configuration information is used for the terminal device to determine a quantity of valid transmission slots in the at least one CG resource.

In an embodiment, the transceiver module 501 is further configured to: send first information to the terminal device; where the first information includes a first parameter, and the first parameter is used to instruct the terminal device to use a target configuration manner to configure the transmission occasions of the CG resource, the target configuration manner including a first configuration manner or a second configuration manner; where the first parameter is used for the terminal device to determine at least one valid transmission slot for the at least one CG resource corresponding to the at least one CG configuration in the target configuration manner and according to the uplink-downlink transmission configuration parameter and the quantity of valid transmission slots in the at least one CG resource.

In an embodiment, the first configuration manner is predefined in the protocol as follows:

If resources are confirmed according to the resource allocation method of multiple CG PUSCH transmission occasions within a CG period (multi-PUSCHs CG) in a slot, and at least one symbol in the slot meets at least one of the following conditions, then the slot cannot be configured as a transmission occasion:

Condition 1: the at least one symbol in the slot overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;
Condition 2: the at least one symbol in the slot overlaps with a synchronization signal (SS)/physical broadcast channel (PBCH) block symbol provided by the uplink-downlink transmission configuration parameter, where the uplink-downlink transmission configuration parameter is parameter ssb-PositionsInBurst.

In an embodiment, the second configuration manner is predefined in the protocol as follows:
If resources are confirmed according to the resource allocation method of multiple CG PUSCH transmission occasions within a CG period (multi-PUSCHs CG) in a slot, and at least one symbol in the slot meets at least one of the following conditions, then the uplink grant-free transmission occasion (TO) conflicting with the slot is discarded:

Condition 1: the at least one symbol in the slot overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: the at least one symbol in the slot overlaps with an SS/PBCH block symbol provided by the uplink-downlink transmission configuration parameter, where the uplink-downlink transmission configuration parameter is parameter ssb-PositionsInBurst.

In an embodiment, the transceiver module 501 is further configured to: send second information to the terminal device; where the second information includes a second parameter, and the second parameter is used to indicate whether the terminal device uses the first configuration manner to configure the transmission occasions of the CG resource; where the second parameter is used for the terminal device to determine at least one valid transmission slot for the at least one CG resource corresponding to the at least one CG configuration in the first configuration manner and according to the uplink-downlink transmission configuration parameter and the quantity of valid transmission slots in the at least one CG resource.

Regarding the apparatus in the above embodiments, the specific manner in which each module performs operations has been described in detail in the embodiments related to the method, and will not be explained in detail here.

Please refer to FIG. 6, which is a schematic structural diagram of another communication apparatus 60 provided by an embodiment of the present disclosure. The communication apparatus 60 may be a network device, or a terminal device, or a chip, a chip system, or a processor that supports a network device to implement the above method, or a chip, a chip system, or a processor that supports a terminal device to implement the above method. The apparatus may be used to implement the method described in the above method embodiments, and specific reference may be made to the description in the above method embodiments.

The communication apparatus 60 may include one or more processors 601. The processor 601 may be a general-purpose processor or a special-purpose processor, etc. For example, it may be a baseband processor or a central processing unit. The baseband processor may be used to process communication protocols and communication data, and the central processing unit may be used to control the communication apparatus (such as a base station, a baseband chip, a terminal device, a terminal device chip, a DU, or a CU), execute computer programs, and process data of the computer programs.

Optionally, the communication apparatus 60 may further include one or more memories 602, on which a computer program 604 may be stored. The processor 601 executes the computer program 604 to cause the communication apparatus 60 to perform the method described in the above method embodiments. Optionally, the memory 602 may also store data. The communication apparatus 60 and the memory 602 may be set separately or integrated together.

Optionally, the communication apparatus 60 may further include a transceiver 605 and an antenna 606. The transceiver 605 may be referred to as a transceiver unit, a transceiver, or a transceiver circuit, etc., and is used to implement transceiver functionality. The transceiver 605 may include a receiver and a transmitter. The receiver may be referred to as a receiver or a receiving circuit, etc., and is used to implement receiving functionality; the transmitter may be referred to as a transmitter or a transmitting circuit, etc., and is used to implement transmitting functionality.

Optionally, the communication apparatus 60 may further include one or more interface circuits 607. The interface circuit 607 is used to receive code instructions and transmit them to the processor 601. The processor 601 runs the code instructions to cause the communication apparatus 60 to perform the method described in the above method embodiments.

In an embodiment, when the communication apparatus 60 is a terminal device: the processor 601 is configured to perform step 201, step 202, and step 203 in FIG. 2; or perform step 302 in FIG. 3. The transceiver 605 is configured to perform step 301 in FIG. 3.

In an embodiment, when the communication apparatus 60 is a network device: the processor 601 is configured to perform step 401 in FIG. 4. The transceiver 605 is configured to perform step 402 in FIG. 4.

In an embodiment, the processor 601 may include a transceiver for implementing receiving and transmitting functions. For example, the transceiver may be a transceiver circuit, an interface, or an interface circuit. The transceiver circuits, interfaces, or interface circuits for implementing receiving and transmitting functions may be separate or integrated together. The above transceiver circuits, interfaces, or interface circuits may be used for reading/writing code/data, or the above transceiver circuits, interfaces, or interface circuits may be used for transmitting or passing signals.

In an embodiment, the processor 601 may store a computer program. The computer program runs on the processor 601, which may cause the communication apparatus 60 to perform the method described in the above method embodiments. The computer program may be solidified in the processor 601. In this case, the processor 601 may be implemented by hardware.

In an embodiment, the communication apparatus 60 may include a circuit, and the circuit may implement the transmitting, receiving, or communication functions in the foregoing method embodiments. The processor and transceiver described in the present disclosure may be implemented on an integrated circuit (IC), an analog IC, a radio frequency integrated circuit (RFIC), a mixed-signal IC, an application-specific integrated circuit (ASIC), a printed circuit board (PCB), an electronic device, etc. The processor and transceiver may also be manufactured using various IC process technologies, such as complementary metal oxide semiconductor (CMOS), N-type metal oxide semiconductor (NMOS), P-type metal oxide semiconductor (PMOS), bipolar junction transistor (BJT), bipolar CMOS (BiCMOS), silicon germanium (SiGe), gallium arsenide (GaAs), etc.

The communication apparatus in the above embodiment descriptions may be a network device or a terminal device, but the scope of the communication apparatus described in the present disclosure is not limited thereto, and the structure of the communication apparatus is not limited by FIG. 6. The communication apparatus may be an independent device or may be part of a larger device. For example, the communication apparatus may be:

(1) an independent integrated circuit (IC), or a chip, or a chip system or subsystem;
(2) a set of one or more ICs, optionally, the set of ICs may also include storage components for storing data and computer programs;
(3) an ASIC, such as a modem (Modem);
(4) a module that may be embedded in other devices;
(5) a receiver, a terminal device, a smart terminal device, a cellular phone, a wireless device, a handset, a mobile unit, a vehicle-mounted device, a network device, a cloud device, an artificial intelligence device, etc.;
(6) others, etc.

Those skilled in the art may also understand that the various illustrative logical blocks and steps listed in the embodiments of the present disclosure may be implemented by electronic hardware, computer software, or a combination of both. Whether such functionality is implemented by hardware or software depends on the specific application and overall design constraints of the system. Those skilled in the art may use various methods to implement the described functionality for each specific application, but such implementation should not be understood as going beyond the scope of protection of the embodiments of the present disclosure.

The embodiments of the present disclosure also provide a communication system. The system includes the communication apparatus as a terminal device in the embodiment of FIG. 5 and the communication apparatus as a network device in the embodiment of FIG. 5, or the system includes the communication apparatus as a terminal device in the embodiment of FIG. 6 and the communication apparatus as a network device in the embodiment of FIG. 6.

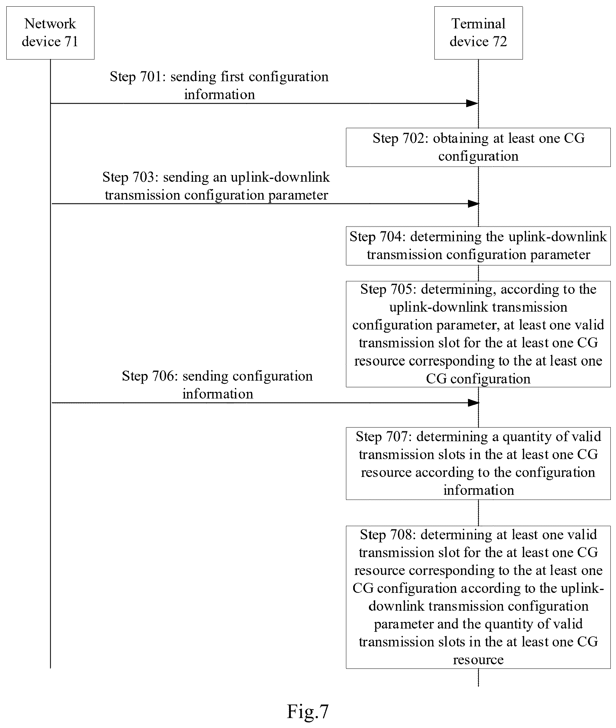

The embodiments of the present disclosure also provide another communication system. The system includes a terminal device and a network device. The terminal device may be configured to implement the method according to any of the embodiments on the terminal device side. The network device may be configured to implement the method according to any of the embodiments on the network device side. FIG. 7 is an interaction flowchart of a communication system provided by an embodiment of the present disclosure. As shown in FIG. 7, the interaction process of the communication system may include, but is not limited to, the following steps.

In step 701, the network device 71 sends first configuration information to the terminal device 72.

In some embodiments, the first configuration information includes at least one configured grant (CG) configuration configured by the network device 71 for the terminal device 72.

In step 702, the terminal device 72 obtains the at least one configured grant (CG) configuration configured by the network device 71.

In step 703, the network device 71 sends an uplink-downlink transmission configuration parameter to the terminal device 72.

In step 704, the terminal device 72 determines the uplink-downlink transmission configuration parameter configured by the network device 71.

In step 705, the terminal device 72 determines, according to the uplink-downlink transmission configuration parameter, at least one valid transmission slot for the at least one CG resource corresponding to the at least one CG configuration; where one CG resource corresponds to one CG configuration.

In step 706, the network device 71 sends configuration information to the terminal device 72.

In the embodiments of the present disclosure, the configuration information includes at least one of the following: a quantity of slots occupied by a transport block size (TBS), a quantity of repetitions of transmission occasions in the at least one CG resource, a quantity of transmission occasions configured in the at least one CG resource, a quantity of valid transmission occasions in the at least one CG resource.

In step 707, the terminal device 72 determines a quantity of valid transmission slots in the at least one CG resource according to the configuration information.

In step 708, the terminal device 72 determines at least one valid transmission slot for the at least one CG resource corresponding to the at least one CG configuration according to the uplink-downlink transmission configuration parameter and the quantity of valid transmission slots in the at least one CG resource.

In an embodiment, the terminal device 72 determines at least one valid transmission slot for the at least one CG resource corresponding to the at least one CG configuration in a preset configuration manner and according to the uplink-downlink transmission configuration parameter and the quantity of valid transmission slots in the at least one CG resource, where the preset configuration manner includes a first configuration manner or a second configuration manner.

In an embodiment, the terminal device 72 receives first information sent by the network device 71; where the first information includes a first parameter, and the first parameter is used to instruct the terminal device 72 to use a target configuration manner to configure the transmission occasions of the CG resource, the target configuration manner including a first configuration manner or a second configuration manner; the terminal device 72 determines at least one valid transmission slot for the at least one CG resource corresponding to the at least one CG configuration in the target configuration manner and according to the first parameter, the uplink-downlink transmission configuration parameter and the quantity of valid transmission slots in the at least one CG resource.

As an example, the terminal device 72 determines that the first parameter is a first value; the terminal device 72 determines at least one valid transmission slot for the at least one CG resource corresponding to the at least one CG configuration in the first configuration manner and according to the uplink-downlink transmission configuration parameter and the quantity of valid transmission slots in the at least one CG resource.

Here, the first configuration manner is predefined in the protocol as follows:

If resources are confirmed according to the resource allocation method of multiple CG PUSCH transmission occasions within a CG period (multi-PUSCHs CG), and at least one symbol in a slot meets at least one of the following conditions, then the slot cannot be configured as a transmission occasion:

Condition 1: the at least one symbol overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: the at least one symbol overlaps with a synchronization signal (SS)/physical broadcast channel (PBCH) block symbol provided by the uplink-downlink transmission configuration parameter, where the uplink-downlink transmission configuration parameter is parameter ssb-PositionsInBurst.

As an example, the terminal device 72 determines that the first parameter is not a first value; the terminal device 72 determines at least one valid transmission slot for the at least one CG resource corresponding to the at least one CG configuration in the second configuration manner and according to the uplink-downlink transmission configuration parameter and the quantity of valid transmission slots in the at least one CG resource.

Here, the second configuration manner is predefined in the protocol as follows:

If resources are confirmed according to the resource allocation method of multiple CG PUSCH transmission occasions within a CG period (multi-PUSCHs CG), and at least one symbol in a slot meets at least one of the following conditions, then the uplink grant-free transmission occasion (TO) conflicting with the slot is discarded:

Condition 1: the at least one symbol overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: the at least one symbol overlaps with an SS/PBCH block symbol provided by the uplink-downlink transmission configuration parameter, where the uplink-downlink transmission configuration parameter is parameter ssb-PositionsInBurst.

In some embodiments, the terminal device 72 receives second information sent by the network device 71; where the second information includes a second parameter, and the second parameter is used to indicate whether the terminal device 72 uses the first configuration manner to configure the transmission occasions of the CG resource; the terminal device 72 determines that the second parameter is a third value; the terminal device 72 determines at least one valid transmission slot for the at least one CG resource corresponding to the at least one CG configuration in the first configuration manner and according to the uplink-downlink transmission configuration parameter and the quantity of valid transmission slots in the at least one CG resource.

In some embodiments, the terminal device 72 uses a process calculation formula to obtain a hybrid automatic repeat request (HARQ) process identifier (ID) used for the first transmission in the at least one CG resource.

Optionally, in one implementation, the cumulative value of the HARQ process ID in the at least one CG resource does not exceed M, where M is any one of the following values: 16, 32, 64.

Optionally, in some embodiments, if the cumulative value of the HARQ process ID in the at least one CG resource reaches M, the terminal device 72 continues to calculate the HARQ process ID used for the remaining transmissions in the at least one CG resource starting from n, where n is a natural number; or, if the cumulative value of the HARQ process ID in the at least one CG resource reaches M, the terminal device 72 continues to calculate the HARQ process ID used for the remaining transmissions in the at least one CG resource by using the process calculation formula.

In some embodiments, step 701, step 703, and step 706 may be exchanged in order or performed simultaneously, and step 702, step 704, and step 707 may be exchanged in order or performed simultaneously.

In some embodiments, at least one of steps 701 to 708 may be performed. For example, step 701 and step 703 may be implemented as independent embodiments, step 702, step 704, and step 705 may be implemented as independent embodiments, steps 701 to 705 may be implemented as independent embodiments, step 701, step 703, and step 706 may be implemented as independent embodiments, step 702, step 704, step 707, and step 708 may be implemented as independent embodiments, but are not limited thereto.

In some embodiments, step 706, step 707, and step 708 are optional, and in different embodiments, one or more of these steps may be omitted or replaced.

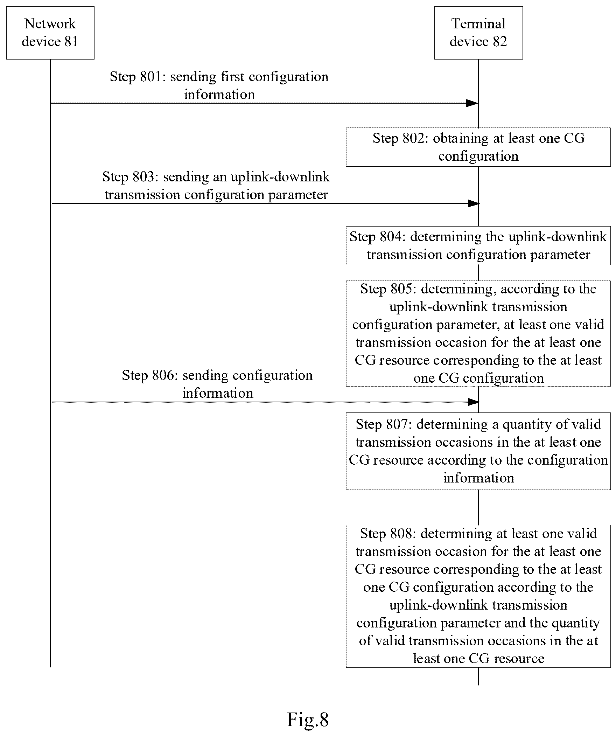

FIG. 8 is an interaction flowchart of another communication system provided by an embodiment of the present disclosure. As shown in FIG. 8, the interaction process of the communication system may include, but is not limited to, the following steps.

In step 801, the network device 81 sends first configuration information to the terminal device 82.

In some embodiments, the first configuration information includes at least one configured grant (CG) configuration configured by the network device 81 for the terminal device 82.

In step 802, the terminal device 82 obtains the at least one configured grant (CG) configuration configured by the network device 81.

In step 803, the network device 81 sends an uplink-downlink transmission configuration parameter to the terminal device 82.

In step 804, the terminal device 82 determines the uplink-downlink transmission configuration parameter configured by the network device 81.

In step 805, the terminal device 82 determines, according to the uplink-downlink transmission configuration parameter, at least one valid transmission occasion for the at least one CG resource corresponding to the at least one CG configuration; where one CG resource corresponds to one CG configuration.

In step 806, the network device 81 sends configuration information to the terminal device 82.

In the embodiments of the present disclosure, the configuration information includes at least one of the following: a quantity of slots occupied by a transport block size (TBS), a quantity of repetitions of transmission occasions in the at least one CG resource, a quantity of transmission occasions configured in the at least one CG resource.

In step 807, the terminal device 82 determines a quantity of valid transmission occasions in the at least one CG resource according to the configuration information.

In step 808, the terminal device 82 determines at least one valid transmission occasion for the at least one CG resource corresponding to the at least one CG configuration according to the uplink-downlink transmission configuration parameter and the quantity of valid transmission occasions in the at least one CG resource.

In an embodiment, the terminal device 82 determines at least one valid transmission occasion for the at least one CG resource corresponding to the at least one CG configuration in a preset configuration manner and according to the uplink-downlink transmission configuration parameter and the quantity of valid transmission occasions in the at least one CG resource, where the preset configuration manner includes a first configuration manner or a second configuration manner.

In an embodiment, the terminal device 82 receives first information sent by the network device 81; where the first information includes a first parameter, and the first parameter is used to instruct the terminal device 82 to use a target configuration manner to configure the transmission occasions of the CG resource, the target configuration manner including a first configuration manner or a second configuration manner; the terminal device 82 determines at least one valid transmission occasion for the at least one CG resource corresponding to the at least one CG configuration in the target configuration manner and according to the first parameter, the uplink-downlink transmission configuration parameter and the quantity of valid transmission occasions in the at least one CG resource.

As an example, the terminal device 82 determines that the first parameter is a first value; the terminal device 82 determines at least one valid transmission occasion for the at least one CG resource corresponding to the at least one CG configuration in the first configuration manner and according to the uplink-downlink transmission configuration parameter and the quantity of valid transmission occasions in the at least one CG resource.

Here, the first configuration manner is predefined in the protocol as follows:

If resources are confirmed according to the resource allocation method of multiple CG PUSCH transmission occasions within a CG period (multi-PUSCHs CG) in a transmission occasion, and at least one symbol in the transmission occasion meets at least one of the following conditions, then the transmission occasion is postponed:

Condition 1: the at least one symbol in the transmission occasion overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: the at least one symbol in the transmission occasion overlaps with a synchronization signal (SS)/physical broadcast channel (PBCH) block symbol provided by the uplink-downlink transmission configuration parameter, where the uplink-downlink transmission configuration parameter is parameter ssb-PositionsInBurst.

As an example, the terminal device 82 determines that the first parameter is not a first value; the terminal device 82 determines at least one valid transmission slot for the at least one CG resource corresponding to the at least one CG configuration in the second configuration manner and according to the uplink-downlink transmission configuration parameter and the quantity of valid transmission slots in the at least one CG resource.

Here, the second configuration manner is predefined in the protocol as follows:

If resources are confirmed according to the resource allocation method of multiple CG PUSCH transmission occasions within a CG period (multi-PUSCHs CG) in a transmission occasion, and at least one symbol in the transmission occasion meets at least one of the following conditions, then the uplink grant-free transmission occasion (TO) conflicting with the slot is discarded:

Condition 1: the at least one symbol in the transmission occasion overlaps with a downlink symbol indicated by the uplink-downlink transmission configuration parameter, where the uplink-downlink transmission configuration parameter includes at least one of: parameter tdd-UL-DL-ConfigurationCommon, parameter tdd-UL-DL-ConfigurationDedicated;

Condition 2: the at least one symbol in the transmission occasion overlaps with an SS/PBCH block symbol provided by the uplink-downlink transmission configuration parameter, where the uplink-downlink transmission configuration parameter is parameter ssb-PositionsInBurst.

In some embodiments, the terminal device 82 receives second information sent by the network device 81; where the second information includes a second parameter, and the second parameter is used to indicate whether the terminal device 82 uses the first configuration manner to configure the transmission occasions of the CG resource; the terminal device 82 determines that the second parameter is a third value; the terminal device 82 determines at least one valid transmission occasion for the at least one CG resource corresponding to the at least one CG configuration in the first configuration manner and according to the uplink-downlink transmission configuration parameter and the quantity of valid transmission occasions in the at least one CG resource.

In some embodiments, the terminal device 82 uses a process calculation formula to obtain a hybrid automatic repeat request (HARQ) process identifier (ID) used for the first transmission in the at least one CG resource.

Optionally, in one implementation, the cumulative value of the HARQ process ID in the at least one CG resource does not exceed M, where M is any one of the following values: 16, 32, 64.

Optionally, in some embodiments, if the cumulative value of the HARQ process ID in the at least one CG resource reaches M, the terminal device 82 continues to calculate the HARQ process ID used for the remaining transmissions in the at least one CG resource starting from n, where n is a natural number; or, if the cumulative value of the HARQ process ID in the at least one CG resource reaches M, the terminal device 82 continues to calculate the HARQ process ID used for the remaining transmissions in the at least one CG resource by using the process calculation formula.

In some embodiments, step 801, step 803, and step 806 may be exchanged in order or performed simultaneously, and step 802, step 804, and step 807 may be exchanged in order or performed simultaneously.

In some embodiments, at least one of steps 801 to 808 may be performed. For example, step 801 and step 803 may be implemented as independent embodiments, step 802, step 804, and step 805 may be implemented as independent embodiments, steps 801 to 805 may be implemented as independent embodiments, step 801, step 803, and step 806 may be implemented as independent embodiments, step 802, step 804, step 807, and step 808 may be implemented as independent embodiments, but are not limited thereto.

In some embodiments, step 806, step 807, and step 808 are optional, and in different embodiments, one or more of these steps may be omitted or replaced.

The present disclosure further provides a computer-readable storage medium having instructions stored thereon, which when executed by a computer, implement the functionality of any of the method embodiments described above.

The present disclosure further provides a computer program product, which when executed by a computer, implements the functionality of any of the method embodiments described above.

In the above embodiments, the implementation may be entirely or partially through software, hardware, firmware, or any combination thereof. When implemented using software, it may be entirely or partially in the form of a computer program product. The computer program product includes one or more computer programs. When the computer program is loaded and executed on a computer, the processes or functions according to the embodiments of the present disclosure are entirely or partially generated. The computer may be a general-purpose computer, a special-purpose computer, a computer network, or other programmable apparatus. The computer program may be stored in a computer-readable storage medium or transmitted from one computer-readable storage medium to another computer-readable storage medium. For example, the computer program may be transmitted from a website, computer, server, or data center to another website, computer, server, or data center via wired means (such as coaxial cable, fiber optic, digital subscriber line (DSL)) or wireless means (such as infrared, wireless, microwave, etc.). The computer-readable storage medium may be any available medium that may be accessed by a computer or a data storage device such as a server or data center integrated with one or more available media. The available medium may be a magnetic medium (e.g., floppy disk, hard disk, magnetic tape), an optical medium (e.g., DVD), or a semiconductor medium (e.g., solid-state drive (SSD)), etc.

Those of ordinary skill in the art may understand that the first, second, and other numerical numbers involved in the present disclosure are only for descriptive convenience and are used to distinguish them, and are not used to limit the scope of the embodiments of the present disclosure, nor do they indicate a sequence.

In the present disclosure, "at least one" may also be described as "one or more", and "multiple" may be two, three, four, or more, which is not limited by the present disclosure. In the embodiments of the present disclosure, for a technical feature, terms such as "first", "second", "third", "A", "B", "C", and "D" are used to distinguish the technical features within that technical feature. The technical features described by "first", "second", "third", "A", "B", "C", and "D" have no sequential or size order.

The corresponding relationships shown in the various tables in the present disclosure may be configured or predefined. The values of the information in each table are only examples and may be configured as other values, which are not limited by the present disclosure. When configuring the correspondence between configuration information and various parameters, it is not necessarily required to configure all the correspondences shown in the tables. For example, in the tables of the present disclosure, the correspondences shown in some rows may not be configured. For another example, appropriate adjustments may be made based on the above tables, such as splitting, merging, etc. The parameter names shown in the titles of the above tables may also be other names understandable by the communication apparatus, and the values or representations of the parameters may also be other values or representations understandable by the communication apparatus. When implementing the above tables, other data structures may also be used, such as arrays, queues, containers, stacks, linear lists, pointers, linked lists, trees, graphs, structures, classes, heaps, hash tables, or hash maps, etc.

In the present disclosure, "predefined" may be understood as defined, predefined, stored, pre-stored, pre-negotiated, pre-configured, solidified, or pre-burned.

Those of ordinary skill in the art may realize that the units and algorithm steps of the examples described in combination with the embodiments disclosed herein may be implemented by electronic hardware, or a combination of computer software and electronic hardware. Whether these functions are performed by hardware or software depends on the specific application and design constraints of the technical solution. Those skilled in the art may use different methods to implement the described functions for each specific application, but such implementation should not be considered beyond the scope of the present disclosure.

Those skilled in the art may clearly understand that for the convenience and brevity of description, for the specific working processes of the systems, apparatuses, and units described above reference may be made to the corresponding processes in the foregoing method embodiments, and details will not be repeated here.

The above are only specific implementations of the present disclosure, but the protection scope of the present disclosure is not limited thereto. Any person skilled in the art can easily think of changes or substitutions within the technical scope disclosed in the present disclosure, which should be covered within the protection scope of the present disclosure. Therefore, the protection scope of the present disclosure should be subject to the protection scope of the claims.

**Claims**

1. A method for determining an uplink grant-free resource, performed by a terminal, comprising:

   obtaining at least one configured grant (CG) configuration;
   determining an uplink-downlink transmission configuration parameter configured by a network device; and
   determining, according to the uplink-downlink transmission configuration parameter, at least one valid transmission slot in at least one CG resource corresponding to the at least one CG configuration, wherein the at least one CG resource is in a one-to-one correspondence with the at least one CG configuration.

2. The method according to claim 1, further comprising:

   receiving configuration information sent by the network device, wherein the configuration information comprises at least one of: a quantity of slots occupied by a transport block size (TBS), a quantity of repetitions of transmission occasions in the at least one CG resource, a quantity of transmission occasions configured in the at least one CG resource or a quantity of valid transmission occasions in the at least one CG resource; and
   determining a quantity of the at least one valid transmission slot in the at least one CG resource according to the configuration information.

3. The method according to claim 2, wherein determining the at least one valid transmission slot in the at least one CG resource corresponding to the at least one CG configuration according to the uplink-downlink transmission configuration parameter comprises:
determining the at least one valid transmission slot in the at least one CG resource corresponding to the at least one CG configuration according to the uplink-downlink transmission configuration parameter and the quantity of the at least one valid transmission slot in the at least one CG resource.

4. The method according to claim 3, wherein determining the at least one valid transmission slot in the at least one CG resource corresponding to the at least one CG configuration according to the uplink-downlink transmission configuration parameter and the quantity of the at least one valid transmission slot in the at least one CG resource comprises: determining the at least one valid transmission slot in the at least one CG resource corresponding to the at least one CG configuration in a preset configuration manner and according to the uplink-downlink transmission configuration parameter and the quantity of the at least one valid transmission slot in the at least one CG resource, wherein the preset configuration manner comprises a first configuration manner or a second configuration manner.

5. The method according to claim 3, wherein determining the at least one valid transmission slot in the at least one CG resource corresponding to the at least one CG configuration according to the uplink-downlink transmission configuration parameter and the quantity of the at least one valid transmission slot in the at least one CG resource comprises:

   receiving first information sent by the network device, wherein the first information comprises a first parameter, and the first parameter is used to instruct the terminal to configure the transmission occasions in the at least one CG resource in a target configuration manner, the target configuration manner comprising a first configuration manner or a second configuration manner; and
   determining the at least one valid transmission slot in the at least one CG resource corresponding to the at least one CG configuration in the target configuration manner and according to the first parameter, the uplink-downlink transmission configuration parameter and the quantity of the at least one valid transmission slot in the at least one CG resource.

6. The method according to claim 5, wherein determining the at least one valid transmission slot in the at least one CG resource corresponding to the at least one CG configuration in the target configuration manner and according to the first parameter, the uplink-downlink transmission configuration parameter and the quantity of the at least one valid transmission slot in the at least one CG resource comprises:

   determining that the first parameter is a first value; and
   determining the at least one valid transmission slot in the at least one CG resource corresponding to the at least one CG configuration in the first configuration manner and according to the uplink-downlink transmission configuration parameter and the quantity of the at least one valid transmission slot in the at least one CG resource.

7. The method according to any one of claims 4 to 6, wherein the first configuration manner is predefined in a protocol as follows:
in a case where a resource is determined in a multiple CG physical uplink shared channel transmission occasions within a CG period (multi-PUSCHs CG) resource allocation manner, a slot, in which at least one symbol meets at least one of the following conditions, is not configured as a transmission occasion:

   condition 1: the at least one symbol in the slot overlaps with a downlink symbol indicated by the uplink-downlink transmission configuration parameter, wherein the uplink-downlink transmission configuration parameter comprises at least one of: a tdd-UL-DL-ConfigurationCommon parameter or a tdd-UL-DL-ConfigurationDedicated parameter; or
   condition 2: the at least one symbol in the slot overlaps with a synchronization signal (SS)/physical broadcast channel (PBCH) block symbol provided by the uplink-downlink transmission configuration parameter, wherein the uplink-downlink transmission configuration parameter is an ssb-PositionsInBurst parameter.

8. The method according to claim 5, wherein determining the at least one valid transmission slot in the at least one CG resource corresponding to the at least one CG configuration in the target configuration manner and according to the first parameter, the uplink-downlink transmission configuration parameter and the quantity of the at least one valid transmission slot in the at least one CG resource comprises:

   determining that the first parameter is not a first value; and
   determining the at least one valid transmission slot in the at least one CG resource corresponding to the at least one CG configuration in the second configuration manner and according to the uplink-downlink transmission configuration parameter and the quantity of the at least one valid transmission slot in the at least one CG resource.

9. The method according to any one of claims 4, 5 or 8, wherein the second configuration manner is predefined in a protocol as follows:

   in a case where a resource is determined in a multi-PUSCHs CG resource allocation manner, an uplink grant-free transmission occasion (TO) conflicts with a slot and at least one symbol in the slot is meets at least one of the following conditions, the TO is discarded:

   condition 1: the at least one symbol in the slot overlaps with a downlink symbol indicated by the uplink-downlink transmission configuration parameter, wherein the uplink-downlink transmission configuration parameter comprises at least one of: a tdd-UL-DL-ConfigurationCommon parameter or a tdd-UL-DL-ConfigurationDedicated parameter; or
   condition 2: the at least one symbol in the slot overlaps with an SS/PBCH block symbol provided by the uplink-downlink transmission configuration parameter, wherein the uplink-downlink transmission configuration parameter is an ssb-PositionsInBurst parameter.

10. The method according to claim 3, wherein determining the at least one valid transmission slot in the at least one CG resource corresponding to the at least one CG configuration according to the uplink-downlink transmission configuration parameter and the quantity of the at least one valid transmission slot in the at least one CG resource comprises:

    receiving second information sent by the network device, wherein the second information comprises a second parameter, and the second parameter is used to indicate whether the terminal uses a first configuration manner to configure the transmission occasions of the at least one CG resource;
    determining that the second parameter is a third value; and
    determining the at least one valid transmission slot in the at least one CG resource corresponding to the at least one CG configuration in the first configuration manner and according to the uplink-downlink transmission configuration parameter and the quantity of the at least one valid transmission slot in the at least one CG resource.

11. The method according to claim 1, further comprising:
    obtaining a hybrid automatic repeat reQuest (HARQ) process identifier (ID) used for a first transmission in the at least one CG resource by using a process calculation formula.

12. The method according to claim 11, wherein a maximum value of the HARQ process ID in the at least one CG resource is not greater than M, wherein M is one of 16, 32 or 64.

13. The method according to claim 12, further comprising:

    in a case where the maximum value of the HARQ process ID in the at least one CG resource reaches M, continuing to calculate an HARQ process ID used for a remaining transmission in the at least one CG resource from n, wherein n is a natural number; or
    in a case where the maximum value of the HARQ process ID in the at least one CG resource reaches M, continuing to calculate an HARQ process ID used for a remaining transmission in the at least one CG resource by using the process calculation formula.

14. A method for configuring an uplink grant-free resource, performed by a network device, comprising:

    configuring at least one configured grant (CG) configuration for a terminal; and
    sending an uplink-downlink transmission configuration parameter to the terminal, wherein the uplink-downlink transmission configuration parameter is used for the terminal to determine at least one valid transmission slot in at least one CG resource corresponding to the at least one CG configuration, and the at least one CG resource is in a one-to-one correspondence with the at least one CG configuration.

15. The method according to claim 14, further comprising:

    sending configuration information to the terminal, wherein the configuration information comprises at least one of: a quantity of slots occupied by a transport block size (TBS), a quantity of repetitions of transmission occasions in the at least one CG resource, a quantity of transmission occasions configured in the at least one CG resource or a quantity of valid transmission occasions in the at least one CG resource,

wherein the configuration information is used for the terminal to determine a quantity of the at least one valid transmission slot in the at least one CG resource.

16. The method according to claim 15, further comprising:

sending first information to the terminal, wherein the first information comprises a first parameter, and the first parameter is used to instruct the terminal to configure the transmission occasions in the at least one CG resource in a target configuration manner, the target configuration manner comprising a first configuration manner or a second configuration manner;
wherein the first parameter is used for the terminal to determine the at least one valid transmission slot in the at least one CG resource corresponding to the at least one CG configuration in the target configuration manner and according to the uplink-downlink transmission configuration parameter and the quantity of the at least one valid transmission slot in the at least one CG resource.

17. The method according to claim 16, wherein the first configuration manner is predefined in a protocol as follows:
in a case where a resource is determined in a multiple CG physical uplink shared channel transmission occasions within a CG period (multi-PUSCHs CG) resource allocation manner, a slot, in which at least one symbol meets at least one of the following conditions, is not configured as a transmission occasion:

condition 1: the at least one symbol in the slot overlaps with a downlink symbol indicated by the uplink-downlink transmission configuration parameter, wherein the uplink-downlink transmission configuration parameter comprises at least one of: a tdd-UL-DL-ConfigurationCommon parameter or a tdd-UL-DL-ConfigurationDedicated parameter; or
condition 2: the at least one symbol in the slot overlaps with a synchronization signal (SS)/physical broadcast channel (PBCH) block symbol provided by the uplink-downlink transmission configuration parameter, wherein the uplink-downlink transmission configuration parameter is an ssb-PositionsInBurst parameter.

18. The method according to claim 16, wherein the second configuration manner is predefined in a protocol as follows:
in a case where a resource is determined in a multi-PUSCHs CG resource allocation manner and an uplink grant-free transmission occasion (TO) conflicts with a slot and at least one symbol in the slot meets at least one of the following conditions, the TO is discarded:

condition 1: the at least one symbol in the slot overlaps with a downlink symbol indicated by the uplink-downlink transmission configuration parameter, wherein the uplink-downlink transmission configuration parameter comprises at least one of: a tdd-UL-DL-ConfigurationCommon parameter or a tdd-UL-DL-ConfigurationDedicated parameter; or
condition 2: the at least one symbol in the slot overlaps with an SS/PBCH block symbol provided by the uplink-downlink transmission configuration parameter, wherein the uplink-downlink transmission configuration parameter is an ssb-PositionsInBurst parameter.

19. The method according to claim 15, further comprising:

sending second information to the terminal, wherein the second information comprises a second parameter, and the second parameter is used to indicate whether the terminal uses a first configuration manner to configure the transmission occasions of the at least one CG resource,
wherein the second parameter is used for the terminal to determine the at least one valid transmission slot in the at least one CG resource corresponding to the at least one CG configuration in the first configuration manner and according to the uplink-downlink transmission configuration parameter and the quantity of the at least one valid transmission slot in the at least one CG resource.

20. A communication system, comprising:

a terminal configured to perform the method according to any one of claims 1 to 13; and
a network device configured to perform the method according to any one of claims 14 to 19.

21. A communication apparatus, comprising a processing module configured to:

obtain at least one configured grant (CG) configuration;

determine an uplink-downlink transmission configuration parameter configured by a network device; and determine, according to the uplink-downlink transmission configuration parameter, at least one valid transmission slot in at least one CG resource corresponding to the at least one CG configuration, wherein the at least one CG resource is in a one-to-one correspondence with the at least one CG configuration.

22. A communication apparatus, comprising:

a processing module configured to configure at least one configured grant (CG) configuration for a terminal; and a transceiver module configured to send an uplink-downlink transmission configuration parameter to the terminal, wherein the uplink-downlink transmission configuration parameter is used for the terminal to determine at least one valid transmission slot in at least one CG resource corresponding to the at least one CG configuration, and the at least one CG resource is in a one-to-one correspondence with the at least one CG configuration.

23. A communication apparatus, comprising a processor and a memory, wherein a computer program is stored in the memory, and the processor executes the computer program stored in the memory to cause the communication apparatus to perform the method according to any one of claims 1 to 13.

24. A communication apparatus, comprising a processor and a memory, wherein a computer program is stored in the memory, and the processor executes the computer program stored in the memory to cause the communication apparatus to perform the method according to any one of claims 14 to 19.

25. A computer-readable storage medium, having stored therein instructions that, when executed, cause the method according to any one of claims 1 to 13 to be implemented.

26. A computer-readable storage medium, having stored therein instructions that, when executed, cause the method according to any one of claims 14 to 19 to be implemented.

Fig.1

---

Obtaining at least one CG configuration — 201

↓

Determining an uplink-downlink transmission configuration parameter configured by the network device — 202

↓

Determining, according to the uplink-downlink transmission configuration parameter, at least one valid transmission slot for the at least one CG resource corresponding to the at least one CG configuration — 203

Fig.2

---

Receiving configuration information sent by a network device — 301

↓

determining, according to the configuration information, a quantity of valid transmission slots in the at least one CG resource — 302

Fig.3a

---

| ←– – –Slot 1– – –* – – –Slot 2– – –* – – –Slot 3– – –* – – –Slot 4– – –* – – –Slot 5– – –* – – –Slot 6– – –→ | | | | | |
|---|---|---|---|---|---|
| valid transmission slot | valid transmission slot | valid transmission slot | valid transmission slot | symbol overlapping with downlink symbol | valid transmission slot |

Fig.3b

---

| ←– – –Slot 1– – –* – – –Slot 2– – –* – – –Slot 3– – –* – – –Slot 4– – –* – – –Slot 5– – –* – – –Slot 6– – –→ | | | | | |
|---|---|---|---|---|---|
| valid transmission slot | valid transmission slot | valid transmission slot | valid transmission slot | symbol overlapping with downlink symbol | downlink transmission slot |

Fig.3c

Configuring at least one CG configuration for a terminal device — 401

Sending an uplink-downlink transmission configuration parameter to the terminal device — 402

Fig.4

50

communication apparatus

transceiver module — 501

processing module — 502

Fig.5

60

communication apparatus

interface circuit — 607

processor — 601

memory — 602

antenna — 606

computer program — 604

transceiver — 605

Fig.6

| Network<br>device 71 | | Terminal<br>device 72 |
|---|---|---|

Step 701: sending first configuration
information

Step 702: obtaining at least one CG
configuration

Step 703: sending an uplink-downlink
transmission configuration parameter

Step 704: determining the uplink-downlink
transmission configuration parameter

Step 705: determining, according to the
uplink-downlink transmission
configuration parameter, at least one valid
transmission slot for the at least one CG
resource corresponding to the at least one
CG configuration

Step 706: sending configuration
information

Step 707: determining a quantity of valid
transmission slots in the at least one CG
resource according to the configuration
information

Step 708: determining at least one valid
transmission slot for the at least one CG
resource corresponding to the at least one
CG configuration according to the uplink-
downlink transmission configuration
parameter and the quantity of valid
transmission slots in the at least one CG
resource

Fig.7

```
┌──────────┐                                          ┌──────────┐
│ Network  │                                          │ Terminal │
│ device 81│                                          │ device 82│
└────┬─────┘                                          └────┬─────┘
     │         Step 801: sending first configuration       │
     │                      information                    │
     │────────────────────────────────────────────────────▶│
     │                                    ┌────────────────────────────────┐
     │                                    │ Step 802: obtaining at least one CG│
     │                                    │           configuration          │
     │                                    └────────────────────────────────┘
     │      Step 803: sending an uplink-downlink            │
     │      transmission configuration parameter           │
     │────────────────────────────────────────────────────▶│
     │                                    ┌────────────────────────────────┐
     │                                    │ Step 804: determining the uplink-downlink│
     │                                    │   transmission configuration parameter │
     │                                    └────────────────────────────────┘
     │                                    ┌────────────────────────────────┐
     │                                    │ Step 805: determining, according to the │
     │                                    │      uplink-downlink transmission         │
     │                                    │ configuration parameter, at least one valid│
     │                                    │ transmission occasion for the at least one │
     │                                    │ CG resource corresponding to the at least  │
     │                                    │           one CG configuration            │
     │      Step 806: sending configuration└────────────────────────────────┘
     │                 information                         │
     │────────────────────────────────────────────────────▶│
     │                                    ┌────────────────────────────────┐
     │                                    │ Step 807: determining a quantity of valid │
     │                                    │ transmission occasions in the at least one │
     │                                    │ CG resource according to the configuration │
     │                                    │              information                  │
     │                                    └────────────────────────────────┘
     │                                    ┌────────────────────────────────┐
     │                                    │ Step 808: determining at least one valid  │
     │                                    │ transmission occasion for the at least one │
     │                                    │ CG resource corresponding to the at least  │
     │                                    │  one CG configuration according to the    │
     │                                    │      uplink-downlink transmission         │
     │                                    │ configuration parameter and the quantity   │
     │                                    │ of valid transmission occasions in the at  │
     │                                    │         least one CG resource             │
     │                                    └────────────────────────────────┘
```

Fig.8

## INTERNATIONAL SEARCH REPORT

| | International application No. |
|---|---|
| | **PCT/CN2023/094070** |

**A. CLASSIFICATION OF SUBJECT MATTER**

H04W72/0446(2023.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 配置, 授权, 机会, 时机, 时隙, 下行, 重复, 重叠, 冲突, 可用, 有效, 无效, 丢弃, 放弃, 自动混合请求重传, 标识, configure, grant, CG, occasion, TO, slot, downlink, DL, overlap, colli+, available, valid, invalid, drop, HARQ, ID

**C. DOCUMENTS CONSIDERED TO BE RELEVANT**

| Category* | Citation of document, with indication, where appropriate, of the relevant passages | Relevant to claim No. |
|---|---|---|
| X | CN 115696585 A (HUAWEI TECHNOLOGIES CO., LTD.) 03 February 2023 (2023-02-03) description, paragraphs 121-137 and 223-231 | 1-10, 14-26 |
| Y | CN 115696585 A (HUAWEI TECHNOLOGIES CO., LTD.) 03 February 2023 (2023-02-03) description, paragraphs 121-137 and 223-231 | 11-13 |
| Y | CN 113676286 A (SPREADTRUM COMMUNICATIONS (SHANGHAI) CO., LTD.) 19 November 2021 (2021-11-19) description, paragraphs 100-110 | 11-13 |
| A | CN 115087118 A (VIVO COMMUNICATION TECHNOLOGY CO., LTD.) 20 September 2022 (2022-09-20) entire document | 1-26 |
| A | WO 2020093964 A1 (VIVO MOBILE COMMUNICATION CO., LTD.) 14 May 2020 (2020-05-14) entire document | 1-26 |
| A | WO 2023051744 A1 (HUAWEI TECHNOLOGIES CO., LTD.) 06 April 2023 (2023-04-06) entire document | 1-26 |

☐ Further documents are listed in the continuation of Box C.    ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 June 2023** | **25 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/094070**

| Patent document cited in search report | | | Publication date (day/month/year) | Patent family member(s) | | | Publication date (day/month/year) |
|---|---|---|---|---|---|---|---|
| CN | 115696585 | A | 03 February 2023 | WO | 2023005744 | A1 | 02 February 2023 |
| CN | 113676286 | A | 19 November 2021 | None | | | |
| CN | 115087118 | A | 20 September 2022 | WO | 2022188737 | A1 | 15 September 2022 |
| WO | 2020093964 | A1 | 14 May 2020 | CN | 111148262 | A | 12 May 2020 |
| WO | 2023051744 | A1 | 06 April 2023 | None | | | |

Form PCT/ISA/210 (patent family annex) (July 2022)